# EUROPEAN PATENT APPLICATION

(11) **EP 4 823 146 A1**
(43) Date of publication of application: **14.10.2026**
(21) Application number: 24906183.9
(22) Date of filing: 10.12.2024
(51) Int. Cl.: H04W 24/02

(54) **MANAGEMENT METHOD AND APPARATUS**

(30) Priority: 22.12.2023 CN 202311787495
(71) Applicant: Huawei Technologies Co., Ltd., Shenzhen, Guangdong 518129 (CN)
(72) Inventor: JIN, Weisheng, Shenzhen, Guangdong 518129 (CN)
(74) Representative: Thun, Clemens
(86) International application number: PCT/CN2024/138083
(87) International publication number: WO 2025/130700

(57) **Abstract**

This application provides a management method and apparatus. In the management method, an interaction command is sent to a terminal device over a mobile network having capabilities such as a persistent connection and control plane signaling, so that a management operation like programming can be performed on a function of the terminal device based on a corresponding command line in the interaction command, enabling the terminal device to implement flexible function modification and upgrade.

## Description

This application claims priority to Chinese Patent Application No. 202311787495.2, filed with the China National Intellectual Property Administration on December 22, 2023, and entitled "MANAGEMENT METHOD AND APPARATUS", which is incorporated herein by reference in its entirety.

### TECHNICAL FIELD

This application relates to the field of communications, and more specifically, to a management method and apparatus.

### BACKGROUND

A 5G system defined by the 3rd generation partnership project (3rd generation partnership project, 3GPP) and implemented and deployed by the industry is essentially a wireless communication pipe for most applications. A network device interacts with a terminal device through an air interface and a non-access stratum (non-access stratum, NAS) to establish a communication pipe and transmit data, but the network device has very a limited capability to manage and control service application functions on the terminal device, for example, an IP multimedia subsystem (IP multimedia subsystem, IMS) service application. The network device may manage and control the service application functions on the terminal device, but cannot manage or control an operating system or other application layer capabilities of the terminal device, and therefore cannot provide richer service applications.

In a future mobile communication system, in addition to a communication pipe, a network device may establish higher-level collaboration with a terminal device. Therefore, for terminal devices of different types, different purposes, and different operating systems, how to remotely and flexibly perform function modification on the terminal devices and perform complex terminal software management is an urgent problem to be resolved.

### SUMMARY

This application provides a management method and apparatus, so that more flexible and complex software management can be performed on terminal devices of different types, different purposes, and different operating systems.

According to a first aspect, a management method is provided. The method is applied to a first management network element, and includes: obtaining an interaction command, where the interaction command is used to perform a management operation on a terminal device; and sending the interaction command to the terminal device.

It should be understood that the first management network element is a network element including a terminal remote management function. The first management network element may be an independent newly added network element, or the first management network element may be an existing network element to which the terminal remote management function is newly added. For example, the terminal remote management function is added to an access management function network element, a session management function network element, or a policy control function network element.

In the foregoing technical solution, the interaction command is sent to the terminal device over a mobile network having capabilities such as a persistent connection and control plane signaling, so that a management operation like programming can be performed on a function of the terminal device based on a corresponding command line in the interaction command, and the terminal device can implement flexible function modification and upgrade. In addition, the terminal device can be jointly orchestrated with a network and a cloud based on end-to-end service demands of a customer, to more accurately and efficiently achieve service objectives of the customer. This technical solution simplifies installation, deployment, operation and maintenance, and management of terminal software, components, and tools, improves personnel efficiency, and accelerates service rollout.

With reference to the first aspect, in some implementations of the first aspect, the interaction command includes an operating system command and/or a management tool command.

With reference to the first aspect, in some implementations of the first aspect, the operating system command includes a command for managing an operating system of the terminal device, and the management tool command is a command for invoking management tool software to perform a management function.

With reference to the first aspect, in some implementations of the first aspect, sending the interaction command to the terminal device includes: sending the interaction command to the terminal device through non-access stratum signaling or user plane signaling.

With reference to the first aspect, in some implementations of the first aspect, the method further includes: obtaining first indication information, where the first indication information indicates that the terminal device is configured with permission information for executing the interaction command; and obtaining the interaction command includes: obtaining the interaction command based on the first indication information.

In this way, the interaction command is obtained by configuring, by a network side, the permission information for executing the interaction command for the terminal device, thereby improving flexibility of management performed by the first management network element on a terminal side.

With reference to the first aspect, in some implementations of the first aspect, the first indication information is obtained based on second indication information, and the second indication information indicates that the terminal device has enabled execution permission on the interaction command.

In this way, the first indication information is obtained based on the execution permission of the interaction command set on the terminal device side, so that a user can perform a subsequent management operation on the terminal device more autonomously, thereby improving user experience.

With reference to the first aspect, in some implementations of the first aspect, obtaining the first indication information includes: receiving the first indication information from a second management network element; or obtaining the second indication information includes: receiving the second indication information from a second management network element. The second management network element includes one of an access and mobility management function network element, a session management function network element, or a policy control function network element, and the first management network element includes a terminal remote management function.

In this way, an independent function network element is set on the network side in a process of obtaining the interaction command and managing the terminal device, and can be clearly distinguished from another current function network element. This facilitates subsequent management, function extension, and continuous evolution of the independent function network element.

With reference to the first aspect, in some implementations of the first aspect, the method further includes: obtaining second indication information, where the second indication information indicates that the terminal device has enabled execution permission on the interaction command; and obtaining the interaction command includes: obtaining the interaction command based on the second indication information.

In this way, the interaction command is obtained based on the indication information about the execution permission of the interaction command on the terminal device side, so that the first management network element on the network side can more appropriately manage the terminal device.

In some implementations, obtaining the second indication information includes: receiving the second indication information from a second management network element. The second management network element includes one of an access and mobility management function network element, a session management function network element, or a policy control function network element, and the first management network element includes a terminal remote management function.

With reference to the first aspect, in some implementations of the first aspect, the method further includes: obtaining an interaction command set from a template library, where the interaction command set includes the interaction command.

In this way, complex and diversified steps in the management operation of the terminal device are implemented in a form of an interaction command in the interaction command set, to implement interaction between the first management network element and the terminal device, thereby freeing manpower, improving efficiency, and supporting massive concurrent running.

In some implementations, the interaction command set is obtained and stored by the template library from a network exposure function network element, and the network exposure function network element includes an application programming interface.

In this way, configuring the interaction command set through the application programming interface of the network exposure function network element enables a third-party vendor (for example, a terminal vendor or an application vendor) to more conveniently and appropriately customize and adapt a specific terminal environment (for example, a specific operating system and/or a terminal software component) and a terminal on which a management operation needs to be performed, and further enables flexible expansion, upgrading, and modification based on subsequent industry development.

With reference to the first aspect, in some implementations of the first aspect, obtaining the interaction command includes: obtaining the interaction command from a network exposure function network element.

The network exposure function network element includes an application programming interface.

In this way, the interaction command is directly obtained through the application programming interface of the network exposure function network element, and interaction is performed with the terminal device, so that a third-party vendor can directly perform real-time remote management and debugging on the terminal device, thereby implementing customization of terminal device management.

With reference to the first aspect, in some implementations of the first aspect, obtaining the interaction command includes: obtaining an interaction script from a script library, where the interaction script includes the interaction command; and sending the interaction command to the terminal device includes: sending the interaction script to the terminal device.

In this way, complex and diversified steps in the management operation of the terminal device are implemented in a form of an interaction script, to implement interaction between the first management network element and the terminal device, thereby freeing manpower, improving efficiency, and supporting massive concurrent running.

In some implementations, the interaction script is obtained and stored by the script library from a network exposure function network element, and the network exposure function network element includes an application programming interface.

In this way, configuring the interaction script through the application programming interface of the network exposure function network element enables a third-party vendor (for example, a terminal vendor or an application vendor) to more conveniently and appropriately customize and adapt a specific terminal environment (for example, a specific operating system and/or a terminal software component) and a terminal on which a management operation needs to be performed, and further enables flexible expansion, upgrading, and modification based on subsequent industry development.

With reference to the first aspect, in some implementations of the first aspect, the method further includes: receiving an execution result of the interaction command from the terminal device; obtaining identification information of a resource repository from the resource repository based on the execution result, where the resource repository includes at least one of a software image, a management tool, a component software package, an auxiliary tool, and a license file; and sending third indication information to the terminal device, where the third indication information includes the identification information.

In this way, the identification information of the resource repository is sent to the terminal device, so that the terminal device can subsequently more conveniently and directly obtain, from the resource repository, resource information required for a specific management operation. In addition, the mobile network has a feature of a transmission channel that is established and operational immediately. The resource repository disposed in a network can avoid problems that the terminal device cannot normally obtain resource information, obtain resources with low efficiency (a slow transmission speed), and is vulnerable to attacks because the terminal device cannot correctly perform addressing in an external network or cannot normally communicate with an external server.

According to a second aspect, a management method is provided. The method is applied to a terminal device, and the method includes: receiving an interaction command from a first management network element; and executing the interaction command to obtain an execution result corresponding to a management operation.

It should be understood that the management method in the second aspect corresponds to the management method in the first aspect. For related beneficial effects, refer to the first aspect. Details are not described herein again.

With reference to the second aspect, in some implementations of the second aspect, the interaction command includes an operating system command and/or a management tool command.

With reference to the second aspect, in some implementations of the second aspect, the operating system command includes a command for managing an operating system of the terminal device, and the management tool command is a command for invoking management tool software to perform a management function.

With reference to the second aspect, in some implementations of the second aspect, receiving the interaction command from the first management network element includes: receiving the interaction command from the first management network element through non-access stratum signaling or user plane signaling.

With reference to the second aspect, in some implementations of the second aspect, the method further includes: sending second indication information to a second management network element, where the second indication information indicates that the terminal device has enabled execution permission on the interaction command.

With reference to the second aspect, in some implementations of the second aspect, sending the second indication information to the second management network element includes: when status information of a debugging switch is opened, sending the second indication information to the second management network element.

In this way, the terminal device sends the second indication information based on a status of the debugging switch, so that the terminal device can have more intuitive execution permission on the interaction command, thereby improving user experience.

With reference to the second aspect, in some implementations of the second aspect, receiving the interaction command from the first management network element includes: receiving an interaction script from the first management network element, where the interaction script includes the interaction command; and executing the interaction command to obtain the execution result includes: executing the interaction script to obtain an execution result corresponding to the interaction script.

With reference to the second aspect, in some implementations of the second aspect, the method further includes: sending the execution result to the first management network element; and receiving third indication information from the first management network element, where the third indication information includes identification information that is of a resource repository and that is determined based on the execution result, and the resource repository includes at least one of a software image, a management tool, a component software package, an auxiliary tool, and a license file.

With reference to the second aspect, in some implementations of the second aspect, the method further includes: obtaining information in the resource repository based on the identification information; and performing a corresponding management task based on the information in the resource repository.

According to a third aspect, a management method is provided. The method is applied to a second management network element, and the method includes: determining first indication information, where the first indication information indicates that a unified data management network element configures, for a terminal device, permission information for executing an interaction command, and the interaction command is used to perform a management operation on the terminal device; and outputting the first indication information to a first management network element.

With reference to the third aspect, in some implementations of the third aspect, before determining the first indication information, the method further includes: receiving second indication information from the terminal device, where the second indication information indicates that the terminal device has enabled execution permission on the interaction command; and obtaining software management permission information from the unified data management network element based on the second indication information, where the software management permission information indicates whether the unified data management network element has configured the execution permission on the interaction command for the terminal device.

With reference to the third aspect, in some implementations of the third aspect, determining first indication information includes: if the management task permission information indicates that the unified data management network element has configured the execution permission on the interaction command for the terminal device, determining the first indication information.

According to a fourth aspect, a management method is provided. The method is applied to a second management network element, and the method includes: receiving second indication information from a terminal device, where the second indication information indicates that the terminal device has enabled execution permission on an interaction command; and outputting the second indication information to a first management network element.

According to a fifth aspect, a management apparatus is provided. The apparatus is located in a first management network element, and the apparatus includes a transceiver unit. The transceiver unit is configured to: obtain an interaction command, where the interaction command is used to perform a management operation on a terminal device; and send the interaction command to the terminal device.

It should be understood that the management apparatus in the fifth aspect corresponds to the management method in the first aspect. For related beneficial effects, refer to the first aspect. Details are not described herein again.

With reference to the fifth aspect, in some implementations of the fifth aspect, the interaction command includes an operating system command and/or a management tool command.

With reference to the fifth aspect, in some implementations of the fifth aspect, the operating system command includes a command for managing an operating system of the terminal device, and the management tool command is a command for invoking management tool software to perform a management function.

With reference to the fifth aspect, in some implementations of the fifth aspect, the transceiver unit is specifically configured to: send the interaction command to the terminal device through non-access stratum signaling or user plane signaling.

With reference to the fifth aspect, in some implementations of the fifth aspect, the transceiver unit is further configured to obtain first indication information, where the first indication information indicates that the terminal device is configured with permission information for executing the interaction command. The transceiver unit is specifically configured to obtain the interaction command based on the first indication information.

With reference to the fifth aspect, in some implementations of the fifth aspect, the first indication information is obtained based on second indication information, and the second indication information indicates that the terminal device has enabled execution permission on the interaction command.

With reference to the fifth aspect, in some implementations of the fifth aspect, the transceiver unit is specifically configured to receive the first indication information from a second management network element. Alternatively, the transceiver unit is specifically configured to receive the second indication information from a second management network element. The second management network element includes one of an access and mobility management function network element, a session management function network element, or a policy control function network element, and the first management network element includes a terminal remote management function.

With reference to the fifth aspect, in some implementations of the fifth aspect, the transceiver unit is further configured to obtain second indication information, where the second indication information indicates that the terminal device has enabled execution permission on the interaction command; and the transceiver unit is specifically configured to obtain the interaction command based on the second indication information.

In some implementations, the transceiver unit is specifically configured to receive the second indication information from the second management network element. The second management network element includes one of an access and mobility management function network element, a session management function network element, or a policy control function network element, and the first management network element includes a terminal remote management function.

With reference to the fifth aspect, in some implementations of the fifth aspect, the transceiver unit is further configured to obtain an interaction command set from a template library, where the interaction command set includes the interaction command.

With reference to the fifth aspect, in some implementations of the fifth aspect, the transceiver unit is specifically configured to obtain the interaction command from a network exposure function network element.

With reference to the fifth aspect, in some implementations of the fifth aspect, the transceiver unit is specifically configured to: obtain an interaction script from a script library, where the interaction script includes the interaction command; and send the interaction script to the terminal device.

With reference to the fifth aspect, in some implementations of the fifth aspect, the transceiver unit is further configured to: obtain identification information of a resource repository from the resource repository based on an execution result, where the resource repository includes at least one of a software image, a management tool, a component software package, an auxiliary tool, and a license file; and send third indication information to the terminal device, where the third indication information includes the identification information.

According to a sixth aspect, a management apparatus is provided. The apparatus is located in a terminal device, and the apparatus includes a communication function unit and a processing unit. The communication function unit is configured to receive an interaction command from a first management network element, where the interaction command is used to perform a management operation on the terminal device. The processing unit is configured to execute the interaction command to obtain an execution result corresponding to the management operation. The communication function unit is further configured to send the execution result to the first management network element.

It should be understood that the management apparatus in the sixth aspect corresponds to the management method in the second aspect. For related beneficial effects, refer to the second aspect. Details are not described herein again.

With reference to the sixth aspect, in some implementations of the sixth aspect, the interaction command includes an operating system command and/or a management tool command.

With reference to the sixth aspect, in some implementations of the sixth aspect, the operating system command includes a command for managing an operating system of the terminal device, and the management tool command is a command for invoking management tool software to perform a management function.

With reference to the sixth aspect, in some implementations of the sixth aspect, the communication function unit specifically includes a transceiver unit and an interaction proxy unit. The transceiver unit is specifically configured to receive the interaction command from the first management network element through non-access stratum signaling or user plane signaling. The interaction proxy unit is specifically configured to: obtain the interaction command from the transceiver unit, and send the interaction command to the operating system of the terminal device.

In this way, the communication function unit in the terminal device is further divided into the transceiver unit and the interaction proxy unit. The transceiver unit has a same communication baseband function as the current terminal device, and is responsible for information transmission. The interaction proxy unit is responsible for interaction between the operating system of the terminal and the first function network element. Such division may help separately perform function evolution, upgrade, and change on two function modules in the future.

With reference to the sixth aspect, in some implementations of the sixth aspect, the interaction proxy unit is further configured to send second indication information to the transceiver unit, where the second indication information indicates that the terminal device has enabled execution permission on the interaction command. The transceiver unit is further configured to send the second indication information to a second management network element.

With reference to the sixth aspect, in some implementations of the sixth aspect, the interaction proxy unit is specifically configured to: when status information of a debugging switch is opened, receive the second indication information from the operating system of the terminal device.

With reference to the sixth aspect, in some implementations of the sixth aspect, the communication function unit specifically includes the transceiver unit and the interaction proxy unit. The transceiver unit is specifically configured to receive the interaction commands from the first management network element one by one. The interaction proxy unit is specifically configured to: obtain the interaction command from the transceiver unit, and send the interaction command to the operating system of the terminal device. The processing unit is specifically configured to execute the interaction command in the operating system of the terminal device, to obtain the execution result.

With reference to the sixth aspect, in some implementations of the sixth aspect, the communication function unit specifically includes the transceiver unit and the interaction proxy unit. The transceiver unit is specifically configured to receive an interaction script from the first management network element, where the interaction script includes the interaction command. The interaction proxy unit is specifically configured to: obtain the interaction script from the transceiver unit, execute the interaction script, and send the interaction command to the operating system of the terminal device. The processing unit is specifically configured to: execute the interaction command in the operating system of the terminal device, to obtain an execution result of the interaction script.

With reference to the sixth aspect, in some implementations of the sixth aspect, the communication function unit specifically includes the transceiver unit and the interaction proxy unit. The transceiver unit is specifically configured to receive third indication information from the first management network element, where the third indication information indicates identification information that is of a resource repository and that is determined based on the execution result, and the resource repository includes at least one of a software image, a management tool, a component software package, an auxiliary tool, and a license file. The interaction proxy unit is specifically configured to: obtain the third indication information from the transceiver unit, and send the third indication information to the operating system of the terminal device.

With reference to the sixth aspect, in some implementations of the sixth aspect, the transceiver unit is further specifically configured to obtain information in the resource repository based on the identification information. The interaction proxy unit is specifically configured to: obtain the information in the resource repository from the transceiver unit, and send the information to the operating system of the terminal device. The processing unit is further configured to perform a corresponding management task based on the information in the resource repository.

According to a seventh aspect, a management apparatus is provided. The apparatus is located in a second management network element, and the apparatus includes a transceiver unit and a processing unit. The processing unit is configured to determine first indication information, where the first indication information indicates that a unified data management network element configures, for a terminal device, permission information for executing an interaction command, and the interaction command is used to perform a management operation on the terminal device. The transceiver unit is configured to output the first indication information to a first management network element.

With reference to the seventh aspect, in some implementations of the seventh aspect, before determining the first indication information, the transceiver unit is further configured to: receive second indication information from the terminal device, where the second indication information indicates that the terminal device has enabled execution permission on the interaction command; and obtain software management permission information from the unified data management network element based on the second indication information, where the software management permission information indicates whether the unified data management network element has configured the execution permission on the interaction command for the terminal device.

With reference to the seventh aspect, in some implementations of the seventh aspect, the processing unit is specifically configured to: if the management task permission information indicates that the unified data management network element has configured the execution permission on the interaction command for the terminal device, determine the first indication information.

According to an eighth aspect, a management apparatus is provided. The apparatus is located in a second management network element, and the apparatus includes a transceiver unit. The method includes: the transceiver unit is configured to receive second indication information from a terminal device, where the second indication information indicates that the terminal device has enabled execution permission on an interaction command; and output the second indication information to a first management network element.

According to a ninth aspect, a management apparatus is provided. The apparatus includes: a memory, configured to store a program; and a processor, configured to execute computer program code or instructions stored in the memory. When the computer program code or the instructions stored in the memory are executed, the processor is configured to perform the method according to any one of the implementations of the first aspect or the second aspect.

In an implementation, the apparatus is the first management network element, the second management network element, or the terminal device in the management method.

In another implementation, the apparatus is a chip, a chip system, or a circuit in the first management network element, the second management network element, or the terminal device in the management method.

According to a tenth aspect, this application provides a processor, configured to perform the method according to any one of the implementations of the first aspect to the fourth aspect. In a process of performing these methods, a process of sending the foregoing information and a process of obtaining/receiving the foregoing information in the foregoing methods may be understood as a process of outputting the foregoing information by the processor and a process of receiving the foregoing input information by the processor. When outputting the information, the processor outputs the information to an interface, and transmits the information through the interface. After the information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, if operations such as related transmitting, sending, and obtaining/receiving do not contradict an actual function or internal logic in related descriptions, the operations may be understood as operations such as outputting, receiving, and inputting, or may be understood as operations such as transmitting, sending, and receiving performed by a radio frequency circuit and an antenna. This is not limited in this application.

In an implementation process, the processor may be a processor specially configured to perform these methods, or may be a processor that executes computer program code or instructions in a memory to perform these methods, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eleventh aspect, a computer-readable storage medium is provided, where the computer-readable medium stores program code or instructions that are executed by a device, and the program code or the instructions are used to perform the method according to any one of the implementations of the first aspect to the fourth aspect.

According to a twelfth aspect, a computer program product including instructions is provided. When the computer program product runs on a computer, the computer is enabled to perform the method according to any one of the implementations of the first aspect to the fourth aspect.

According to a thirteenth aspect, a chip is provided. The chip includes a processor and a communication interface, and the processor reads, through the communication interface, instructions stored in a memory, to perform the method according to any one of the implementations of the first aspect to the fourth aspect.

Optionally, in an implementation, the chip may further include a memory. The memory stores computer program code or instructions. The processor is configured to execute the computer program code or the instructions stored in the memory. When the computer program code or the instructions are executed, the processor is configured to perform the method according to any one of the implementations of the first aspect to the fourth aspect.

According to a fourteenth aspect, a management system is provided, including at least one of a first management network element, a second management network element, and a terminal device. The first management network element is configured to perform the method according to any one of the implementations of the first aspect, and the terminal device is configured to perform the method according to any one of the implementations of the second aspect.

### BRIEF DESCRIPTION OF DRAWINGS

FIG. 1 is a diagram of an architecture of a 3GPP system in a 5G system according to an embodiment of this application;
FIG. 2 is a diagram of a network architecture according to an embodiment of this application;
FIG. 3A and FIG. 3B each are a diagram of an architecture of a terminal device according to an embodiment of this application;
FIG. 4A and FIG. 4B are a schematic flowchart of a management method according to an embodiment of this application;
FIG. 5A and FIG. 5B are a schematic flowchart of another management method according to an embodiment of this application;
FIG. 6A and FIG. 6B are a schematic flowchart of still another management method according to an embodiment of this application;
FIG. 7 is a schematic flowchart of yet another management method according to an embodiment of this application;
FIG. 8 is a schematic flowchart of yet another management method according to an embodiment of this application;
FIG. 9 is a schematic flowchart of yet another management method according to an embodiment of this application;
FIG. 10 is a schematic flowchart of yet another management method according to an embodiment of this application;
FIG. 11A and FIG. 11B are a schematic flowchart of yet another management method according to an embodiment of this application;
FIG. 12 is a diagram of a management apparatus according to an embodiment of this application;
FIG. 13 is a diagram of a structure of a management apparatus according to an embodiment of this application; and
FIG. 14 is a diagram of a chip system according to an embodiment of this application.

### DESCRIPTION OF EMBODIMENTS

The following describes technical solutions of this application with reference to accompanying drawings.

For ease of understanding embodiments of this application, the following points are described.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists, where A and B may be singular or plural. In text descriptions of this application, the character "/" generally represents an "or" relationship between associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numerical numbers (for example, #1 and #2) are merely for distinguishing for ease of description, and are not intended to limit the scope of embodiments of this application, for example, are intended to distinguish between different management network elements but not to describe a specific order or sequence. It should be understood that objects described in such a way are interchangeable in an appropriate circumstance, so that a solution other than embodiments of this application can be described.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, the descriptions do not mean that a determining action after these condition conjunctions is the only condition for implementing the result, and other additional conditions may be included to implement the result.

Fifth, in this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in this application, "indicate" may include a direct indication and an indirect indication. When a piece of indication information is described as indicating A, the indication information may directly indicate A or indirectly indicate A, but it does not necessarily indicate that the indication information carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, "protocols" in this application may be standard protocols in the communication field, for example, may include a 5G protocol, a new radio (new radio, NR) protocol, and a related protocol applied to a future communication system. This is not limited in this application. "Predefinition" may include definition in advance, for example, protocol definition. "Pre-configuration" may be implemented by pre-storing corresponding code or a corresponding table in a device, or may be implemented in another manner that may indicate related information. A specific implementation thereof is not limited in this application.

Eighth, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

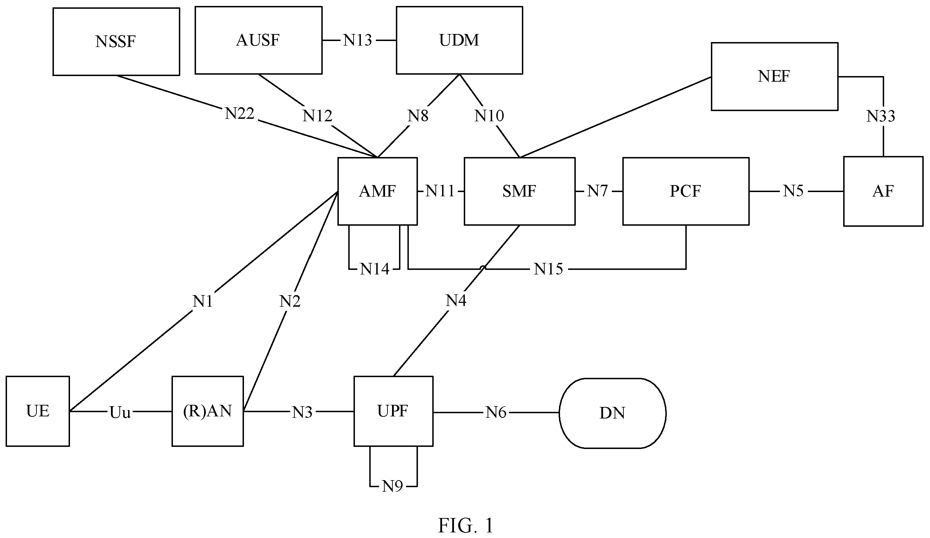

FIG. 1 is a diagram of an architecture of a 3GPP system in a 5G system according to an embodiment of this application. As shown in FIG. 1, a current 3GPP architecture mainly includes the following network functions and entities: user equipment (user equipment, UE), a (radio) access network (radio access network, (R)AN) device, a data network (data network, DN), and a core network. The following separately describes components in a communication system.
1. User equipment: The user equipment may also be referred to as a terminal, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, an extended reality (extended reality, XR) terminal (for example, XR glasses with a head mounted display), a holographic projector, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not merely a hardware device, but is used to implement a powerful function through software support, data interaction, and cloud interaction. In a broad sense, intelligent wearable devices include full-featured and large-sized devices that can implement all or some functions without relying on smartphones, for example, smart watches or smart glasses, and devices that focus only on a specific type of application function and need to be used together with other devices such as smartphones, for example, various smart bands or smart jewelry for monitoring physical signs.

2. Access network device: The access network device may also be referred to as an access device, that is, a (radio) access network (radio access network, (R)AN). The(R)AN can manage a radio resource and provide an access service to user equipment, to complete forwarding of user equipment data between the user equipment and a core network. The (R)AN may also be understood as a base station in a network.

The (R)AN may be a 3GPP-related cellular system, for example, a 4G or 5G mobile communication system, or a future-oriented evolved system (for example, a 6G mobile communication system). The (R)AN may alternatively be an open radio access network (open RAN, O-RAN or ORAN), a cloud radio access network (cloud radio access network, CRAN), or a wireless fidelity (wireless fidelity, Wi-Fi) system. The (R)AN may alternatively be a communication system integrating the foregoing two or more systems. The (R)AN may also be referred to as a (R)AN node or another term, for example, an access network device. In this application, unless otherwise specified, the access network device is used for expression.

For example, the access network device in embodiments of this application may be any communication device with a wireless transceiver function for communicating with the user equipment. The access network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a next generation NodeB (next generation NodeB, gNB) or a transmission point (TRP or TP) in a 5G system like an NR system, or may be one antenna panel or a group (including a plurality of antenna panels) of antenna panels of a base station in a 5G system, or may be a network node that constitutes a gNB or a transmission point, for example, a baseband unit (BBU) or a distributed unit (distributed unit, DU), or may be a next generation base station in a 6th generation mobile communication system or a base station in a future mobile communication system. Optionally, the access network device may alternatively be a wearable device, a vehicle, a vehicle-mounted device, or the like. For example, an access network device in a vehicle-to-everything (vehicle-to-everything, V2X) technology may be a road side unit (road side unit, RSU). It may be understood that all or some functions of the access network device in this application may alternatively be implemented through a software function running on hardware, or may be implemented through a virtualization function instantiated on a platform (for example, a cloud platform). The method performed by the access network device in this application may alternatively be implemented by a logical node, a logical module, or software that can implement all or a part of functions of an access network device.

In some deployments, a plurality of access network devices collaborate to assist user equipment in implementing wireless access, and different access network devices each implement a part of functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit BBU. The radio unit RU may be included in a radio frequency device or a radio frequency unit, for example, included in a remote radio unit (remote radio unit, RRU), an active antenna unit (active antenna unit, AAU), or a remote radio head (remote radio head, RRH). The CU implements some functions of the access network device, and the DU implements some functions of the access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is generated by the CU, and is finally encapsulated at the PHY layer of the DU into the information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in a RAN, or the CU may be classified as an access network device in the core network (core network, CN). This is not limited in this application.

It should be understood that embodiments of this application may be further applied to a fixed network, for example, a fixed access network and a transmission network.

3. A data network DN is an operator network that is mainly configured to provide a data service for UE, for example, the Internet, a third-party service network, or an IMS network.

4. A core network is a device in a core network that provides service support for a terminal. The core network is configured to implement three functions: registration, connection, and session management. Currently, some examples of core network devices are an application network element, a network exposure network element, a policy control network element, a session management network element, an access management network element, a user plane network element, and the like. The following describes these network elements in the core network in detail.

Application network element: In a 5G communication system, the application network element may be an application function (application function, AF) network element, and mainly supports interaction with a 3GPP core network to provide a service, for example, affecting data routing decision-making, a policy control function, or providing some third-party services for a network side.

Network exposure network element: In a long term evolution (long term evolution, LTE) communication system, the network exposure network element may be a service capability exposure function (service capability exposure function, SCEF) network element. In the 5G communication system, the network exposure network element may be a network exposure function (network exposure function, NEF) network element, and mainly supports secure interaction between a 3GPP network and a third-party application. The NEF can securely expose network capabilities and events to a third party to enhance or improve application service quality. The 3GPP network can also securely obtain related data from the third party to enhance intelligent decision-making of the network. In addition, the network function supports restoration of structured data from a unified database or storage of structured data in a unified database.

The session management network element is mainly configured to: manage a session, allocate and manage an internet protocol (internet protocol, IP) address of user equipment, select an endpoint that can manage a user plane function interface and a policy control and charging function interface, perform downlink data notification, and the like. In the LTE communication system, the session management network element may be a serving gateway control plane (serving gateway control plane, SGW-C), a packet data network gateway control plane (packet data network gateway control plane, PGW-C), or a network element in which an SGW-C and a PGW-C are integrated. In the 5G communication system, the session management network element may be a session management function (session management function, SMF) network element, and implements IP address allocation for a terminal, UPF selection, charging, QoS policy control, and the like.

The access management network element is mainly configured to perform mobility management, access management, and the like, and may be configured to implement functions, for example, lawful interception and access authorization/authentication, other than session management in functions of a mobility management entity (mobility management entity, MME). In the LTE communication system, the access management network element may be an MME network element. In the 5G communication system, the access management network element may be an access and mobility management function (access and mobility management function, AMF), and mainly performs functions such as mobility management and access authentication/authorization. In addition, the access management network element is further responsible for transferring a user policy between a terminal and a policy control function (policy control function, PCF) network element. It should be understood that the access and mobility management network element may be further classified into an access management network element and a mobility management network element.

The policy control network element includes a user subscription data management function, a policy control function, a charging policy control function, quality of service (quality of service, QoS) control, and the like, is a unified policy framework used to guide network behavior, and provides policy rule information and the like for a control plane function network element (for example, an AMF or an SMF network element). In the LTE communication system, the policy control network element may be a policy control and charging function (policy control and charging function, PCRF). In the 5G communication system, the policy control network element may be a PCF network element.

The user plane network element serves as an interface to a data network, and completes functions such as user plane data forwarding, session/flow-level charging statistics, and bandwidth throttling, that is, packet routing and forwarding, handling of quality of service (quality of service, QoS) of user plane data, and the like. In the LTE communication system, the user plane network element may be a serving gateway user plane (serving gateway user plane, SGW-U), a packet data network gateway user plane (packet data network gateway user plane, PGW-U), or a network element in which an SGW-U and a PGW-U are integrated. In the 5G communication system, the user plane network element may be a user plane function (user plane function, UPF) network element.

Authentication server function (authentication server function, AUSF) network element: Main functions include user authentication and authorization, and the like.

Network slice selection function (network slice selection function, NSSF) network element: Main functions include selecting a network slice example set for serving UE, and the like.

A unified data management (unified data management, UDM) network element is mainly used for subscription data management of UE, including storage and management of a UE identifier, access authorization of the UE, and the like.

In a future communication system, for example, a 6G communication system, the foregoing network element or device may still use a name of the network element or device in a 4G or 5G communication system, or may have another name. This is not limited in embodiments of this application. The functions of the network elements or devices may be implemented by one independent network element, or may be jointly implemented by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

It may be understood that FIG. 1 is merely an example, and does not constitute any limitation on the protection scope of this application. The data transmission method provided in embodiments of this application may further involve a network element that is not shown in FIG. 1. Certainly, the data transmission method provided in embodiments of this application may alternatively include only some network elements shown in FIG. 1.

In addition, as shown in FIG. 1, the figure shows an interaction relationship between network function entities and corresponding interfaces. For example, the UE and the AMF may interact with each other through an N1 interface (NAS). Interaction between other network function entities is similar, and details are not described again. Some interfaces may be implemented in a service-based interface manner.

It should be understood that the UE, the (R)AN, the UPF, and the DN in FIG. 1 are generally referred to as user plane network function entities, and data traffic of a user may be transmitted through a protocol data unit session (protocol data unit session, PDU session) established between the UE and the DN. This data transmission process involves two network entities, namely, the (R)AN and the UPF. Other network entities may be referred to as control plane network functions and entities, and are mainly responsible for functions such as authentication and authorization, registration management, session management, mobility management, and policy control, to implement reliable and stable transmission of user plane traffic.

A 5G system defined by 3GPP and implemented and deployed by the industry and a 5G-A system being defined by 3GPP are essentially wireless communication pipes for most applications. A network device interacts with a terminal device through an air interface and a NAS to establish a communication pipe and transmit data, but the network device has a very limited capability to manage and control service application functions on the terminal device, for example, an IP multimedia subsystem (IMS) service application. The network device may manage and control the service application functions on the terminal device, but cannot manage or control an operating system or other application layer capabilities of the terminal device, and therefore cannot provide richer service applications.

Other applications on the terminal device are installed by a third party on the terminal device and communicate with a system outside the network through a wireless communication pipe, to implement service functions.

Currently, KubeEdge is a first open intelligent edge platform that is extended based on Kubernetes and provides cloud-edge collaboration capabilities. In various solutions, software components similar to those included in an edge part of KubeEdge may be deployed on a small computing platform (for example, a gateway, an industrial computer, a personal computer, or a server that is used to directly connect to devices such as machines, tools, and instruments and meters), or directly deployed on various smart devices (such as cameras, robots, and consumer terminal devices), to implement data collection and control of the devices. In embodiments of this application, an edge part deployed on such a computing platform or device is referred to as a deep-edge (deepedge), to distinguish from another edge form that is deployed at a higher position of the edge part and has more computing storage resources and communication capabilities.

Kubernetes (also referred to as "k8s") is a mainstream open-source container (container) cluster orchestration platform, and can be used to deploy and manage containerized application software systems on a large scale, so that containers can be conveniently scheduled and orchestrated. A container is a lightweight, operating system-level virtualization technology that allows an application and a dependency of the application to run in an isolated environment. All necessary components required to run an application are packaged into a single image, and the image can be reused. When the image is run, the image is run in an independent environment and does not share a memory, a central processing unit (central processing unit, CPU), or a disk of an operating system of a host with another application. This ensures that a process inside the container does not affect any process outside the container. Popular container technologies include Docker, iSula, and the like.

Containers, Kubernetes, and KubeEdge can be installed and deployed on devices running Ubuntu, CentOS, and other Linux operating systems, and can also be deployed, after adaptation, on operating systems such as a robot operating system (robot operating system, ROS), Windows, HarmonyOS, OpenHarmony, iOS, and Android. To fully install and deploy these containers, platforms, and other software components (such as EdgeMesh, Istio, and Mosquitto) on a specific operating system, different software tools may be required. These tools include management tools that exist in a form of software packages, libraries, modules, or configuration files, such as kubeadm, keadm, apt-get, apt, dpkg, yum, rpm, snap, and python. These tools work in conjunction with corresponding operating system commands or management tool commands to install, update, delete, and manage software image instances (containers) and other software packages and files. Table 1 provides examples of software images, software components, management tools, operating system commands, and management tool commands.

**Table 1**

| | | |
|---|---|---|
| Software image | | For example, images such as Docker, Kubernetes, and KubeEdge, including application images |
| | Container runtime (container runtime) | The container runtime (such as containerd, CRI-O, Docker Engine, and Mirantis Container Runtime) is used to create, run, and destroy containers, and can be interacted with through scripts or command lines, for example, container commands |
| Software component | Container runtime interface (container runtime interface, CRI) | Container runtime interface |
| | kubelet | kubelet is a core component of a Kubernetes system, and is responsible for managing and maintaining pods on each node and ensures that the pods run as expected |
| | kubeadm | Provide tools such as kubeadm init and kubeadm join to create a Kubernetes cluster |
| | kubectl | kubectl is a command-line tool that uses a Kubernetes API to communicate with a control plane of a Kubernetes cluster, and kubectl can be used to deploy applications, monitor and manage cluster resources, and view logs |
| Software image | | For example, images such as Docker, Kubernetes, and KubeEdge, including application images |
| Operating system commands | | For example, su -, sudo, curl, echo, systemctl +, and corresponding parameters |
| Management tool commands | | For example, apt, apt-get, import, os.exec*(), os.popen(), docker+, and corresponding parameters |

Currently, a third party installs software on a terminal device and communicates with a system outside a network through a wireless communication pipe. This type of service has a complex deep-edge environment for onsite deployment, high requirements, and time-consuming operations, and cannot meet massive application demands. The following disadvantages exist: First, a container, a container cluster, a cloud native system architecture, an edge-cloud collaboration system architecture, and tools involve a large number of software systems, and technologies and software versions are iterated quickly and updated frequently. Second, the deep-edge deployment environment is closely related to the terminal hardware device, but configurations vary. Many variables need to be considered. Third, most deep-edge devices do not have a user interface (user interface, UI), and need to be connected to a host computer for configuration. The process is complex, and onsite deployment is time-consuming. Fourth, current operations mainly rely on manual work (installation and deployment, configuration and update, and operation and maintenance). Extensive information technology (information technology, IT) knowledge is required, requirements are high, and the operations are time-consuming. As the demand for deep-edge deployment increases, manually operating the massive devices is no longer feasible. Fifth, automation tools of a current IT system require manual establishment of network communication between a deep-edge and a central configuration server, and installation boot software needs to be manually pre-installed on the deep-edge. Due to involvement of numerous software and hardware systems, a unified ecosystem cannot be formed. Only some steps can be automatically completed, and a large number of manual operations are still required.

Currently, in addition to installing software on a terminal device by a third party, software upgrade, version update, and the like on a deep-edge may be implemented by using an over the air (over the air, OTA) technology. The OTA technology is mainly used for software upgrade and update of smartphones and intelligent automotive systems. Currently, an essence of the OTA technology is that a cloud triggers a terminal device to download a software package, and the terminal device side performs software upgrade and update. An OTA upgrade process includes fixed operations such as installation (installation), verification (verification), and activation (activation). These fixed operations have clear purposes and flexible terminal function modification or complex terminal software management cannot be implemented.

Regardless of whether the third party installs software on the terminal device or implements a software management method like device-side software installation, authentication, and activation through the OTA technology, an automation level is low, and complex software management cannot be achieved. Currently, as a mobile communication network with a wide topology and an agile communication status awareness capability, the mobile communication network is essentially only used as a data transmission channel, and advantages of the mobile communication network are not fully utilized. For example, a mobile communication network of a compute infrastructure can provide users with better service experience and lower-cost and higher-efficiency service applications.

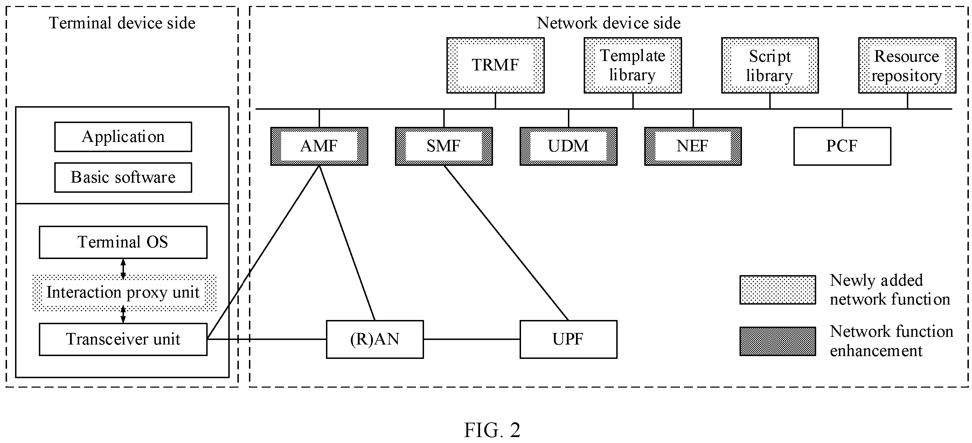

Therefore, to resolve the foregoing problems, embodiments of this application provide a management method and apparatus for terminal devices of different types, different purposes, and different operating systems, to remotely and flexibly perform function modification and complex terminal software management. The following provides detailed descriptions with reference to FIG. 2 to FIG. 14.

It should be understood that the management method provided in this embodiment of this application may collaborate with a cloud platform or an edge platform in a form of a deep-edge platform, to form a cloud-device, edge-device, or cloud-edge-device solution, and complete complex services.

FIG. 2 is a diagram of a network architecture according to an embodiment of this application. As shown in FIG. 2, the network architecture provided in this application includes a network device side and a terminal device side.

Function network elements or entities on the network device side may include an AMF, an SMF, a UDM, an NEF, a PCF, a (R)AN, a UPF, and the like in a current network architecture. Not all function network elements on the network device side are shown in FIG. 2. For specific functions of these function network elements, refer to related descriptions in FIG. 1. In addition, the network device side in this embodiment of this application may further include new function network elements: a terminal remote management function (terminal remote management function, TRMF) network element, a template library, a script library, and a resource repository (resource repository).

The terminal remote management function performs management and control interaction on software on the terminal device side through non-access stratum signaling or user plane signaling. The TRMF network element may be an independent function network element, and the TRMF may be combined with a current function network element. For example, the TRMF may be combined with one or more network elements such as the AMF, the SMF, the UDM, the NEF, or the PCF in FIG. 2.

The template library may include an interaction command set, and the interaction command set includes at least one interaction command. The script library includes an interaction script, and the interaction script includes a plurality of interaction commands. The interaction command may include an operating system command and/or a management tool command, and encapsulation, interpretation, and translation of the operating system command and/or the management tool command. For example, the operating system command may include but is not limited to the commands shown in Table 1, and the management tool command may include but is not limited to the commands shown in Table 1.

The resource repository is configured to store resource information corresponding to a management task, and the resource information includes some or a part of a software image, a management tool, a component, an auxiliary tool, a license file (license file), and the like. For example, the management tool may include software packages, libraries, modules, and configuration files such as kubeadm, keadm, apt-get, apt, dpkg, yum, rpm, snap, and python, to complete installation, update, deletion, and management of software image instances (containers) and other software packages and files. The software component is other software that needs to be installed and deployed, including but not limited to the software shown in Table 1. The auxiliary tool includes a transmission software package, a CA certificate, and the like. The software image includes but is not limited to the software image shown in Table 1.

It should be understood that the template library, the script library, and the resource repository may also be independent network entities, and any one of the template library, the script library, and the resource repository may also be combined with a current function network element. A specific existence form of the template library, the script library, and the resource repository is not limited in this embodiment of this application.

The terminal device side includes an application layer and an operating system (operating system, OS) layer. The application layer includes basic software, and the basic software may include container technology (Docker, containerd, iSula, or the like), platform or system (Kubernetes, KubeEdge, or the like), tool (kubeadm, keadm, apt, rpm, or the like), and component (EdgeMesh, Istio, Mosquitto, or the like) software and configurations installed on the terminal. The operating system layer may also be referred to as a terminal OS. The terminal device side further includes a communication function unit, and the communication function unit includes a transceiver unit and an interaction proxy unit. The transceiver unit has a terminal communication protocol stack like 3GPP, including a control plane protocol stack and a user plane protocol stack. The interaction proxy unit is configured to serve as a proxy for an interaction command between the network device side and the terminal OS on the terminal device side. In other words, the interaction proxy unit may perform command line invoking of the terminal OS, for example, input an interaction command for execution and obtain an interaction command output. The terminal OS may run the interaction command obtained from the interaction proxy unit.

It should be understood that, in addition to the terminal remote management in a form of the interaction command provided in this embodiment of this application, the terminal device side further applies artificial intelligence interaction, prompt word interaction, or the like.

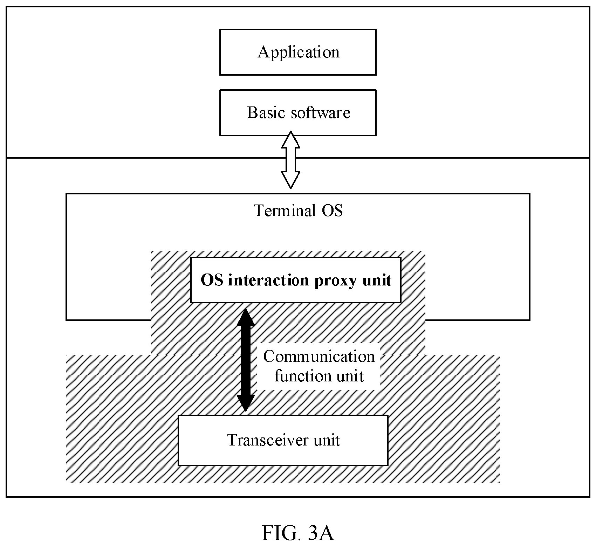

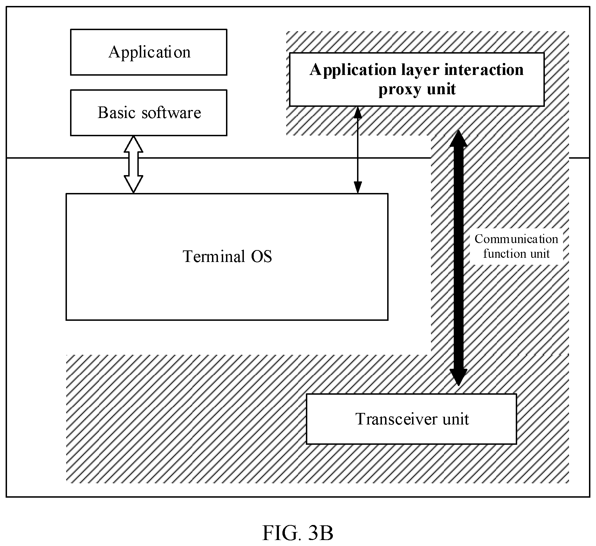

It should be understood that the interaction proxy unit may be located at the operating system layer on the terminal device side, or may be located at the application layer. FIG. 3A and FIG. 3B each are a diagram of an architecture of a terminal device according to an embodiment of this application.

As shown in FIG. 3A, a function unit of the interaction proxy may be located in the terminal OS, and may also be referred to as an OS interaction proxy unit. The interaction command is transferred to the OS interaction proxy unit in the terminal OS through the transceiver unit in the communication function unit, so that the terminal OS can execute the interaction command, and further perform a management operation on the terminal device. Correspondingly, an execution result of the interaction command by the terminal OS may be returned to the network device side through the OS interaction proxy unit and the transceiver unit.

As shown in FIG. 3B, a function unit of the interaction proxy may be located at the application layer, and may also be referred to as an application layer interaction proxy unit. The interaction command is transferred to the application layer interaction proxy unit at the application layer through the transceiver unit in the communication function unit. The application layer interaction proxy unit communicates with the terminal OS to implement command line invoking of the terminal OS, so that the terminal OS can execute the interaction command, and further perform a management operation on the terminal device. Correspondingly, an execution result of the interaction command by the terminal OS may be returned to the network device side through the application layer interaction proxy unit and the transceiver unit.

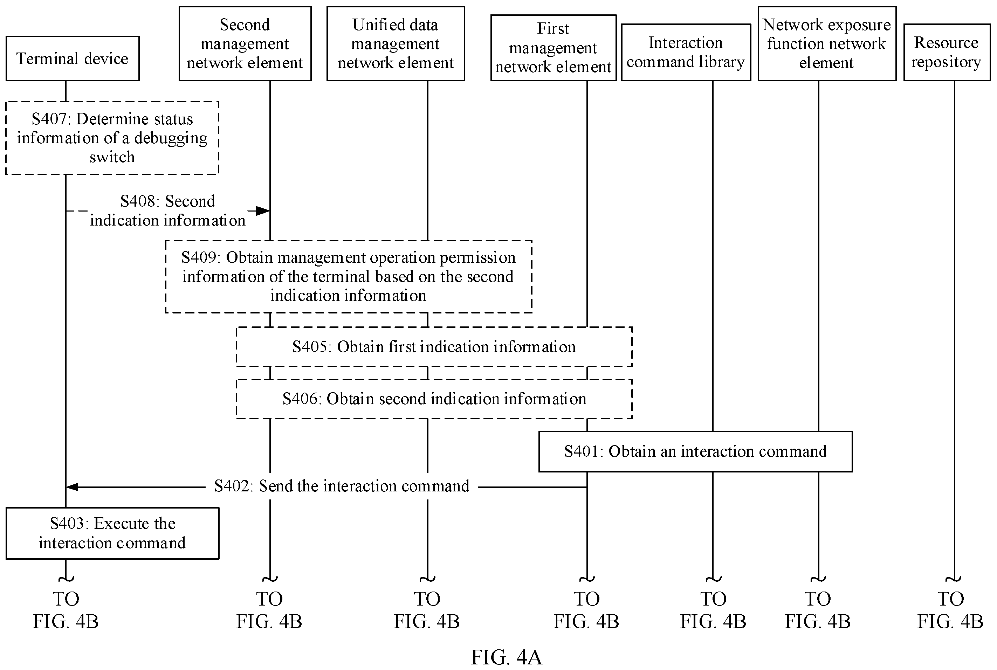

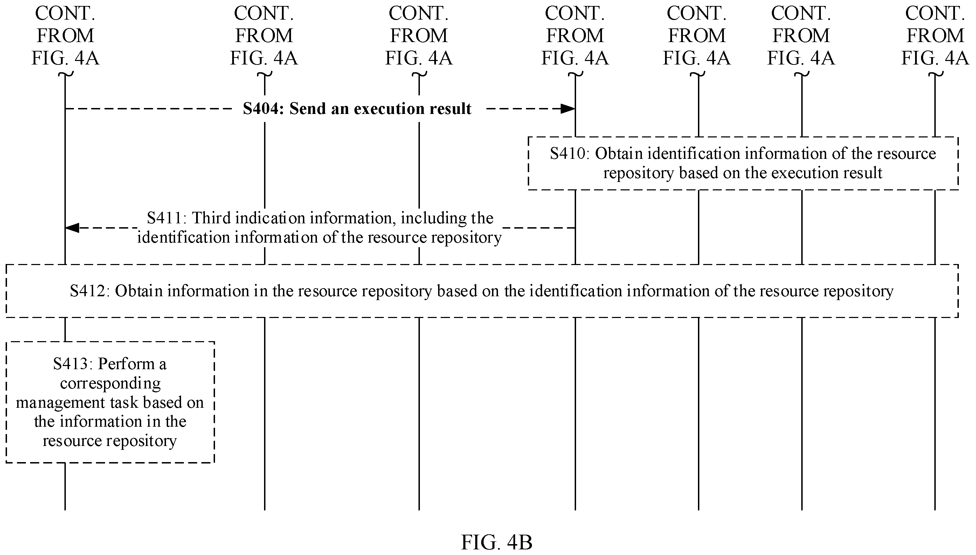

FIG. 4A and FIG. 4B are a schematic flowchart of a management method according to an embodiment of this application. It may be understood that, in this application, an example in which the terminal device and the network device serve as execution bodies of an interaction example is used to describe a corresponding method. However, the execution body of the interaction example is not limited in this application. For example, a method implemented by the terminal device may alternatively be implemented by a module (for example, a chip, a chip system, or a processor) of the terminal device, or may be implemented by a logical node, a logical module, or software that can implement all or a part of functions of the terminal device. For the logical modules of the terminal device, refer to FIG. 3A and FIG. 3B. The network device may include one or more of function network elements such as a first management network element, a second management network element, a unified data management UDM network element, and a network exposure function network element.

It should be understood that the first management network element is a network element having a terminal remote management function. The first management network element may be a newly added management function network element. For example, the first management network element may be a newly added terminal remote management function TRMF network element, and the second management network element may be an AMF network element. In this case, the first management network element and the second management network element are independent of each other.

Alternatively, the second function network element may be an enhanced function on an existing function network element. In other words, a terminal remote management function TRMF is assigned to the existing function network element. For example, the terminal remote management function TRMF is assigned to one of function network elements such as the AMF, the SMF, the UDM, the NEF, or the PCF. Specifically, if the second management network element is an AMF network element, the terminal remote management function TRMF is assigned to the AMF network element. In this case, the first management network element may also be an AMF network element, and the first management network element and the second management network element are a same network element. If the second management network element is an AMF network element, the terminal remote management function TRMF is assigned to an SMF network element. In this case, the first management network element may alternatively be an SMF network element. If the AMF network element is divided into an access management network element and a mobility management network element, the terminal remote management function TRMF may be assigned to one of the access management network element and the mobility management network element. A specific form of a network element having the terminal remote management function in a future network is not limited in this embodiment of this application.

S401: The first management network element obtains an interaction command, where the obtained interaction command is used by a terminal device to perform a management operation.

It should be understood that the obtained interaction command may belong to an interaction command set or an interaction script. The interaction command set includes a plurality of interaction commands, and there is a corresponding execution sequence between the plurality of interaction commands. The interaction script also includes a plurality of interaction commands. The interaction script is a script, that is, an interaction command set that exists as a file or an entire message.

In a possible implementation, the obtained interaction command may include an operating system command and/or a management tool command.

The operating system command includes a command for managing an operating system of the terminal device, and the management tool command is a command for invoking management tool software to perform a management function.

It should be understood that a specific operating system command may include but is not limited to the operating system command shown in Table 1. A specific management tool command may include but is not limited to the management tool command shown in Table 1.

For example, in a Linux system, the interaction command set may include a set of a series of operating system commands and/or management tool commands that carry a specific management operation, such as su - and sudo + command. The interaction command set may further include processing logic corresponding to the execution result fed back by the terminal device. The interaction command set may further carry a first interaction type identifier. The first interaction type identifier indicates that interaction with the terminal device is performed based on the interaction command set. The first interaction type identifier may further include a function of the interaction command set on the terminal device, for example, an operation like installation, update, configuration, or deletion.

For another example, in the Linux system, an interaction script may include an interaction command set that includes an operating system command and/or a management tool command, such as su - and sudo + command. The interaction script is essentially an interaction command set that exists as a file or an entire message. The interaction script may further carry a second interaction type identifier. The second interaction type identifier indicates that interaction with the terminal device is performed based on the interaction script. The second interaction type identifier may further include a function of the interaction script on the terminal device, for example, an operation like installation, update, configuration, or deletion.

In a possible implementation, the first management network element obtains the interaction command from an interaction command library. The interaction command library may include a template library or a script library. The template library includes an interaction command set, and the script library includes an interaction script.

In some implementations, the first management network element obtains the interaction command set from a template library. The interaction command set may be preconfigured in the template library.

A specific preconfiguration manner may be: A third-party vendor (for example, a terminal vendor) configures the interaction command set for the template library through an application programming interface (application programming interface, API) interface of a network exposure function NEF network element, and the template library stores the interaction command set. Alternatively, the interaction command set may be configured for the template library through another network element. This is not limited in this application.

In some implementations, the first management network element obtains the interaction script from the script library. The interaction script may be preconfigured in the script library. For a specific preconfiguration manner, refer to the foregoing manner. Details are not described herein again.

In a possible implementation, the first management network element directly obtains a real-time interaction command from a third-party vendor through an API of a network exposure function network element.

S402: The first management network element sends the interaction command to the terminal device.

In a possible implementation, the first management network element sends the interaction command to the terminal device through non-access stratum signaling or user plane signaling.

It should be understood that the first management network element may directly send the interaction command to the terminal device, or may send the interaction command to the terminal device through an intermediate function network element. This is not limited in this application.

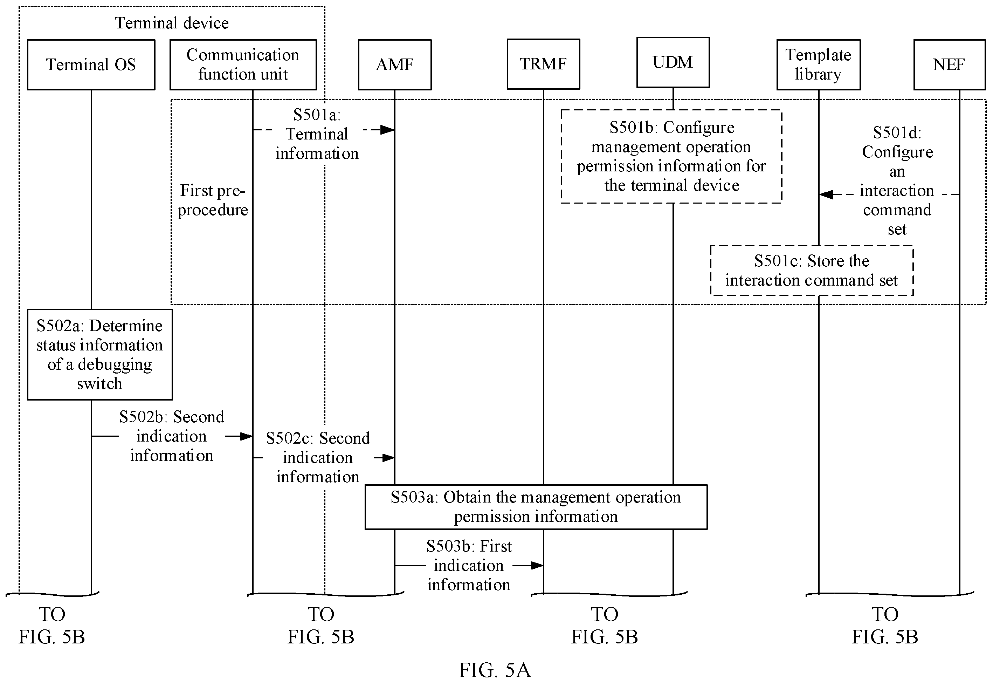

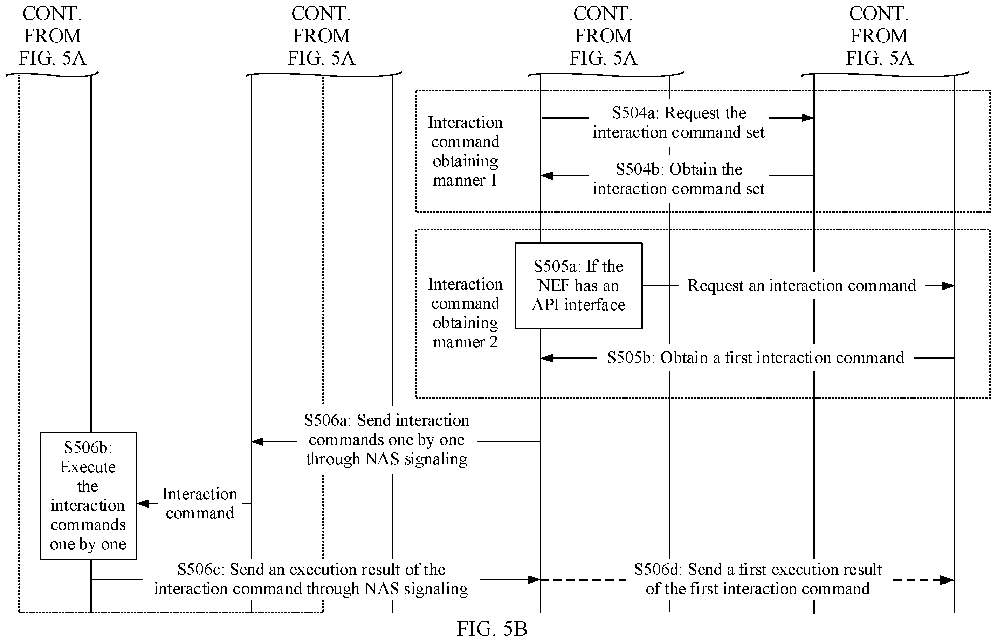

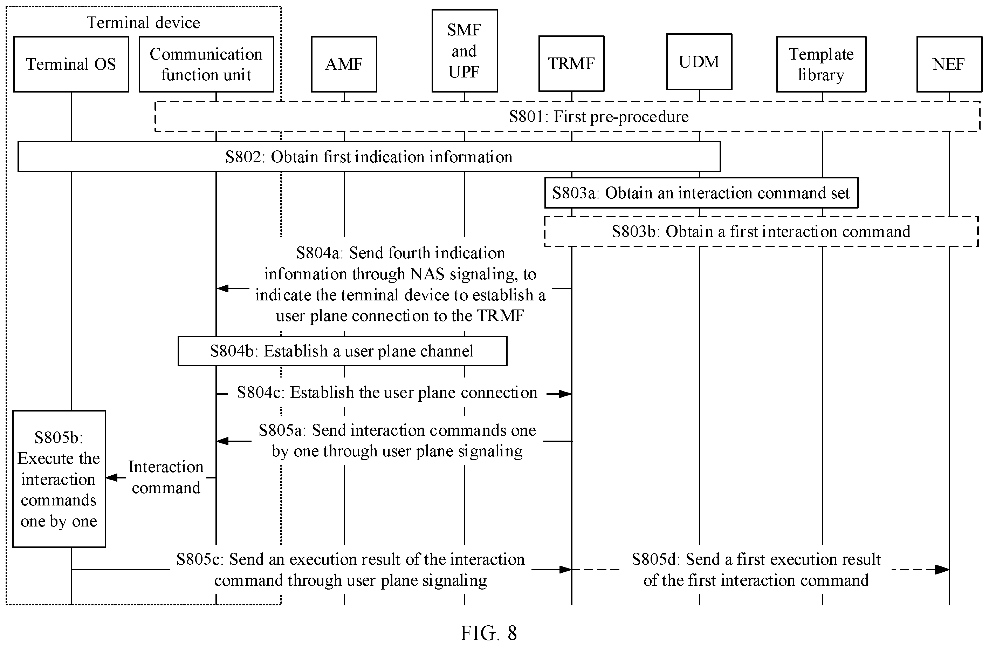

It should be understood that, subsequently, a manner of sending the interaction command through non-access stratum signaling is described in detail with reference to FIG. 5A and FIG. 5B to FIG. 7, and a manner of sending the interaction command through user plane signaling is described in detail with reference to FIG. 8 to FIG. 10.

In a possible implementation, if the interaction command obtained in S401 belongs to the interaction command set, the first management network element may send interaction commands in the interaction command set to the terminal device one by one. Alternatively, the first management network element may send a plurality of interaction commands in the interaction command set to the terminal device at a time. This is not limited in embodiments of this application.

In a possible implementation, if the interaction command obtained in S401 belongs to the interaction script, the first management network element may send the interaction script to the terminal device.

S403: The terminal device executes the interaction command to obtain an execution result corresponding to the management operation.

In a possible implementation, if the first management network element sends the interaction commands in the interaction command set to the terminal device one by one in S402, the terminal device executes the received interaction commands in the interaction command set one by one, to obtain execution results corresponding to the management operation. If the first management network element sends the plurality of interaction commands in the interaction command set to the terminal device at a time in S402, the terminal device executes the plurality of received interaction commands in the interaction command set, to obtain execution results corresponding to the management operation.

In a possible implementation, if the first management network element sends the interaction script to the terminal device in S402, the terminal device executes the received interaction script, to obtain an execution result corresponding to the received interaction script.

It should be understood that, for specific unit modules of the terminal device in FIG. 4A and FIG. 4B, refer to FIG. 3A and FIG. 3B. Details are not described herein from the specific unit modules in the terminal device. A subsequent detailed execution process is specifically described in FIG. 5A and FIG. 5B.

Optionally, S404: The terminal device sends the execution result to the first management network element.

In a possible implementation, if the terminal device executes the interaction commands in the received interaction command set one by one in S403, the terminal device may send the execution results to the first management network element one by one.

For example, the steps of sending the interaction commands one by one, executing the interaction commands one by one, and returning the execution results one by one in S402 to S404 may be coherently described as follows: The first management network element sends a first interaction command to the terminal device, and the terminal device executes the first interaction command to obtain a first execution result corresponding to the first interaction command, and sends the first execution result to the first management network element. Then, the first management network element sends a second interaction command to the terminal device, where the second interaction command may be determined based on the first execution result (for example, if the first interaction command is an undetermined command, and the first execution result indicates an execution result of the first interaction command, the second interaction command may be a subsequent interaction command corresponding to the first interaction result). The terminal device executes the second interaction command to obtain a second execution result corresponding to the second interaction command, and sends the second execution result to the first management network element. The rest may be deduced by analogy until the terminal device reaches the end of the interaction command set.

For example, the steps of sending the plurality of interaction commands at a time, executing the plurality of interaction commands at a time, and returning the execution results at a time in S402 to S404 may be coherently described as follows: The first management network element sends a plurality of third interaction commands to the terminal device, and the terminal device executes the plurality of third interaction commands at a time to obtain third execution results corresponding to the plurality of third interaction commands, and then sends the third execution results to the first management network element. Subsequent steps are similar to the foregoing steps of sending the commands one by one, and details are not described herein again. It should be understood that, in a manner in which the plurality of interaction commands are sent at a time to enable the terminal device to execute the plurality of interaction commands, some auxiliary information may further be required. In this embodiment of this application, sending of the additional auxiliary information by the first management network element is not limited.

In the foregoing technical solution, the interaction command is sent to the terminal device over a mobile network having capabilities such as a persistent connection and control plane signaling, so that a management operation like programming can be performed on a function of the terminal device based on a corresponding command line in the interaction command, and the terminal device can implement flexible function modification and upgrade. In addition, the terminal device can be jointly orchestrated with a network and a cloud based on end-to-end service demands of a user, to more accurately and efficiently achieve service objectives of the user. This technical solution simplifies installation, deployment, operation and maintenance, and management of terminal software, components, and tools, improves personnel efficiency, and accelerates service rollout.

Optionally, a manner of triggering the first management network element to obtain the interaction command in S401 may include the following step S405 or S406.

Optionally, S405: The first management network element obtains first indication information, where the first indication information indicates that the terminal device is configured with permission information for executing the interaction command.

The first indication information may include type information of the management operation of the terminal device and/or terminal information. The terminal information may include but is not limited to at least one of a terminal hardware model and version, an operating system name and version, a terminal hardware resource and status, DeepEdgePaaS resource setting reserved by the terminal for a deep-edge, and a terminal identifier.

In a possible implementation, the unified data management UDM network element configures, for the terminal device, the permission information for executing the interaction command. The permission information for executing the interaction command may also be referred to as management operation permission information.

Specifically, the first management network element directly queries, from the UDM network element, whether the UDM network element configures, for the terminal device, the permission information for executing the interaction command, and then obtains the first indication information from the UDM network element. A detailed manner is specifically described in FIG. 5A and FIG. 5B.

It should be understood that the first management network element learns, based on the first indication information, that the terminal device can be remotely managed through the interaction command.

Optionally, the first management network element obtains the interaction command based on the first indication information.

In a possible implementation, if the first management network element is an independently newly added TRMF network element, the first management network element may receive the first indication information from the second management network element, and the second management network element may obtain the first indication information from the unified data management UDM network element.

Optionally, S406: The first management network element obtains second indication information from the second management network element, where the second indication information indicates that the terminal device has enabled execution permission on the interaction command.

It should be understood that if the first management network element obtains the second indication information, the second indication information may trigger the first management network element to obtain the interaction command.

Optionally, the first management network element obtains the interaction command based on the second indication information.

In some implementations, the UDM network element configures, for all terminal devices, permission information for executing the interaction command. In this case, the first management network element may directly obtain the interaction command based on the second indication information without obtaining the first indication information.

Optionally, S407: The terminal device determines status information of a debugging switch. The debugging switch may be a physical switch of the terminal device, or may be a switch control or a selection control of a user interaction interface with a screen of the terminal device.

Optionally, S408: The terminal device sends the second indication information to the second management network element. The second indication information may include status information indicating that the debugging switch is opened, or the second indication information may further include type information of the management operation and/or terminal information.

In a possible implementation, when the status information indicates that the debugging switch is opened, the terminal device sends the second indication information to the second management network element.

Optionally, S409: The second management network element obtains the management operation permission information of the terminal device from the unified data management UDM network element based on the second indication information.

In a possible implementation, the first indication information in S405 may alternatively be obtained by the first management network element based on the second indication information.

If the unified data management UDM network element configures, for the terminal device, the permission information for executing the interaction command, the second management network element sends the first indication information to the first management network element.

If the unified data management UDM network element does not configure, for the terminal device, the permission information for executing the interaction command, the second management network element sends, to the first management network element, indication information indicating not to perform the management operation on the terminal device.

Optionally, after S404, S410: The first management network element obtains identification information of a resource repository based on the execution result.

The resource repository (resource repository) includes at least one of a software image, a management tool, a component software package, an auxiliary tool, and a license file.

For example, the management tool may include at least one of the following information: software packages, libraries, modules, and configuration files such as kubeadm, keadm, apt-get, apt, dpkg, yum, rpm, snap, and python, to complete installation, update, deletion, and management of software image instances (containers) and other software packages and files. The component software package may include other software that needs to be installed and deployed. The auxiliary tool may include a transmission software package, a certificate authority (certificate authority, CA) certificate, or the like.

Specifically, the first management network element indicates a specific management task based on the execution result. For example, the management task may include system initialization, software installation, update, deletion, configuration, control, and obtaining a resource on a terminal.

Optionally, S411: The first management network element sends third indication information to the terminal device, where the third indication information includes the identification information of the resource repository.

For example, the identification information may include a data network name (data network name, DNN) of the resource repository and/or an identifier of the resource repository.

Specifically, if the first management network element is an independent network element having a TRMF, and the second management network element is an AMF network element, the first management network element may send the third indication information to the terminal device through the second management network element. For example, the third indication information is sent to the terminal device through non-access stratum signaling. Alternatively, the third indication information is sent to the terminal device through user plane signaling.

If the first management network element is an AMF network element and has a terminal remote management function TRMF, the first management network element may directly send the third indication information to the terminal.

Optionally, S412: The terminal device may obtain information in the resource repository from the resource repository based on the identification information of the resource repository.

Optionally, S413: The terminal device performs a corresponding management task based on the information in the resource repository.

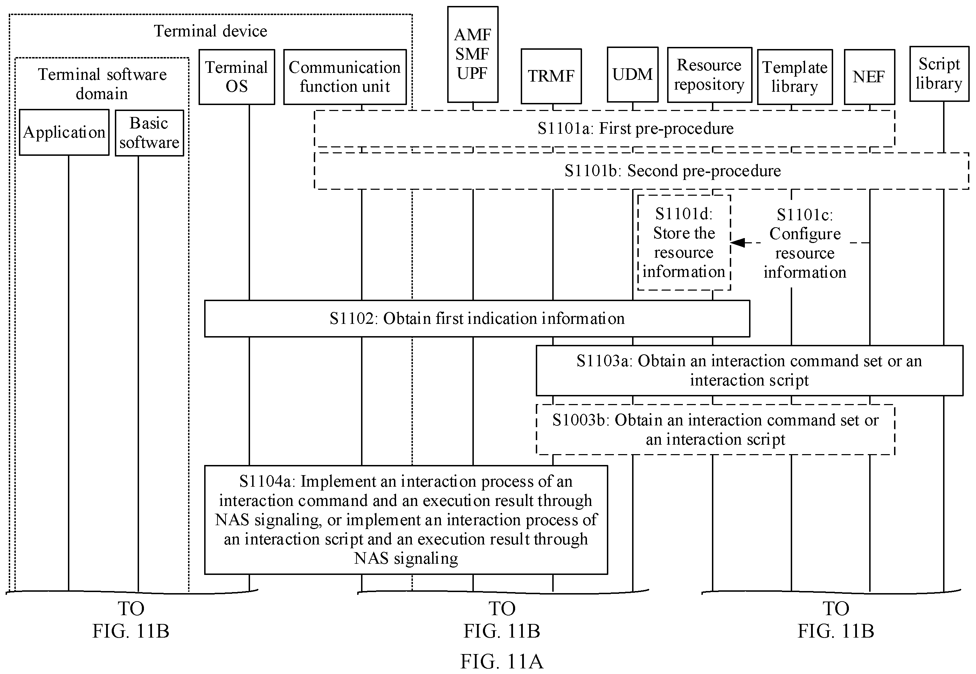

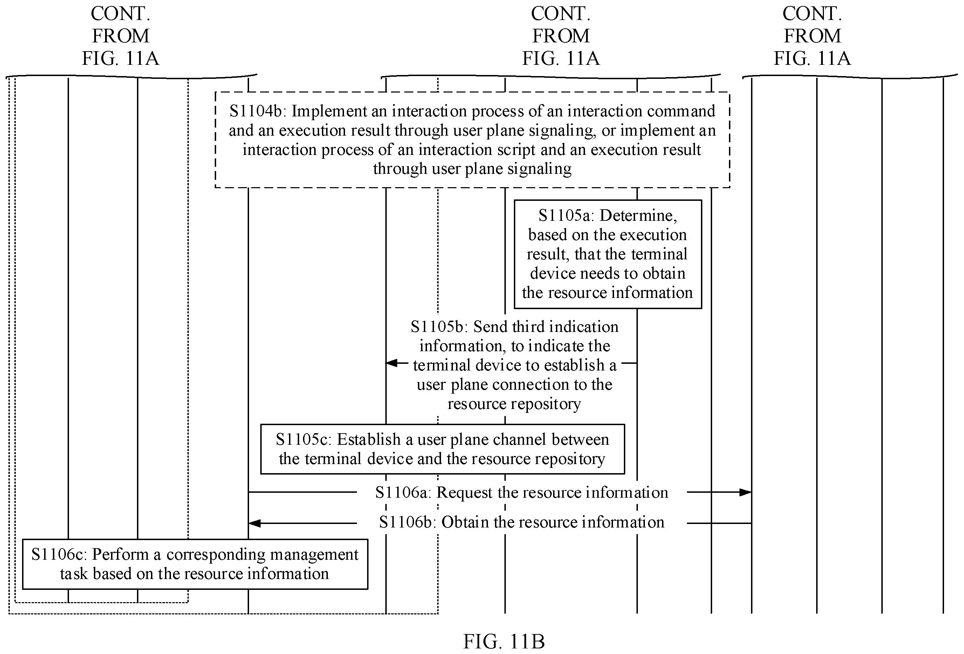

It should be understood that a detailed process of S410 to S413 is described in detail in FIG. 11A and FIG. 11B.

With reference to FIG. 5A and FIG. 5B to FIG. 7, the following describes in detail that a network element having a terminal remote management function TRMF sends a remote interaction command to a terminal device through non-access stratum signaling, so that the terminal device performs a management operation corresponding to the interaction command. To clearly describe the terminal remote management function TRMF, in FIG. 5A and FIG. 5B to FIG. 7, an example in which the first management network element is an independent TRMF network element is used for description.

FIG. 5A and FIG. 5B are a schematic flowchart of another management method according to an embodiment of this application. It may be understood that, in this application, an example in which the terminal device and the network device serve as execution bodies of an interaction example is used to describe a corresponding method. However, the execution body of the interaction example is not limited in this application. For example, a method implemented by the terminal device may alternatively be implemented by a module (for example, a chip, a chip system, or a processor) of the terminal device, or may be implemented by a logical node, a logical module, or software that can implement all or a part of functions of the terminal device. For the logical modules of the terminal device, refer to FIG. 3A and FIG. 3B. The network device may include function network elements, for example, an AMF, a TRMF, a UDM, a NEF, and a template library shown in FIG. 5A and FIG. 5B.

It should be understood that the AMF may be the second management network element in FIG. 4A and

FIG. 4B, and the TRMF may be the first management network element in FIG. 4A and FIG. 4B. Alternatively, a function of the TRMF may be implemented on the AMF. In other words, the first management network element and the second management network element are a same network element. In addition, corresponding operations of the terminal device are described in detail by using specific units in the terminal device in FIG. 5A and FIG. 5B.

S501a: The terminal device sends terminal information to the AMF.

Specifically, a communication function unit of the terminal device sends the terminal information to the AMF. For example, as shown in FIG. 3A and FIG. 3B, a transceiver unit of the terminal device sends the terminal information to the AMF. For another example, as shown in FIG. 3A and FIG. 3B, an interaction proxy unit (an OS interaction proxy unit or an application layer interaction proxy unit) of the terminal device outputs the terminal information to the transceiver unit, and then the transceiver unit sends the terminal information to the AMF.

S501b: The UDM configures management operation permission information for the terminal device, where the management operation permission information indicates that the terminal device is allowed to perform a management operation based on an interaction command.

Specifically, the UDM obtains the terminal information of the terminal device from the AMF, and the UDM configures the management operation permission information based on the terminal information of the terminal device.

Optionally, the management operation permission information may further include type information of the management operation implemented for the terminal device.

It should be understood that, that the UDM configures the management operation permission information for the terminal device may also be referred to as that the UDM configures subscription information of a terminal management operation for the terminal device. For example, the subscription information indicates that the terminal device has a subscription that can be controlled by a remote interaction command, or the subscription information indicates that the terminal device has a subscription that can be used to install and deploy software by a remote interaction command, or the subscription information indicates that the terminal device has a subscription that can be used to run a software service by a remote interaction command after software is installed and deployed. A management operation type corresponding to the management operation permission information and a specific subscription type indicated by the subscription information are not limited in this application.

S501c: The template library stores an interaction command set, where the interaction command set includes at least one interaction command.

It should be understood that, for a detailed explanation of the interaction command, refer to S401. Details are not described herein again.

In a possible implementation, the interaction command set may be preconfigured in the template library through higher layer signaling.

In a possible implementation, S501d: The NEF configures, for the template library, the interaction command set for the terminal device.

The NEF has an API, and a terminal manufacturer may configure the interaction command set for the template library through the API of the NEF.

It should be understood that S501a, S501b, S501c, and S501d may all be referred to as a first pre-procedure, and the pre-procedure is an optional step. For example, the UDM may configure the management operation permission information for all terminal devices. In this case, the management operation permission information does not need to be separately configured for the terminal device. For another example, the interaction command set may be preconfigured in the template library in another manner. For another example, the terminal information does not need to be sent to the AMF in advance.

S502a: A terminal operating system (operating system, OS) of the terminal device determines status information of a debugging switch. The status information of the debugging switch may indicate that the debugging switch is in an opened state or a closed state.

Specifically, the terminal operating system of the terminal device receives a first operation instruction, and determines the status information of the debugging switch, where the first operation instruction may be opening or closing the debugging switch. Alternatively, the terminal operating system of the terminal device determines the status information of the debugging switch by obtaining an initial state of the debugging switch, where the initial state of the debugging switch may be an opened state or a closed state.

S502b: The terminal OS of the terminal device transmits second indication information to the communication function unit, where the second indication information indicates that the terminal device has enabled execution permission on the interaction command.

It should be understood that, for specific content that may be included in the second indication information, refer to S408. Details are not described herein again.

Specifically, the communication function unit includes a transceiver unit and an interaction proxy unit. The second indication information may be transmitted by the terminal OS to the interaction proxy unit, and then transmitted by the transmission proxy unit to the transceiver unit.

S502c: The communication function unit sends the second indication information to the AMF. The AMF receives the second indication information from the communication function unit.

Specifically, the transceiver unit of the terminal device sends the second indication information to the AMF.

S503a: The AMF requests the management operation permission information of the terminal device from the UDM based on the second indication information, and obtains the management operation permission information from the UDM.

Specifically, if the management operation permission information indicates that the UDM has not configured, for the terminal device, the permission information for executing the interaction command, the network-side function network element does not perform a remote management operation on the terminal device.

If the management operation permission information indicates that the UDM configures, for the terminal device, the permission information for executing the interaction command, S503b is performed, and the AMF sends first indication information to the TRMF, where the first indication information indicates that the terminal device configures the permission information for executing the interaction command.

It should be understood that, for specific content that may be included in the first indication information, refer to S405. Details are not described herein again.

S504a: The TRMF requests the interaction command set from the template library based on the first indication information.

It should be understood that when the TRMF requests the interaction command set from the template library, the request may include the type information of the management operation and/or the terminal information.

Specifically, the TRMF determines, based on the first indication information, to perform the management operation on the terminal device, to request, from the template library, an interaction command set corresponding to a type of the management operation.

S504b: The template library sends the interaction command set to the TRMF, and the TRMF obtains the interaction command set from the template library.

Specifically, the template library sends the interaction command set to the TRMF based on the type information of the management operation and/or the terminal information.

It should be understood that, for a detailed explanation of the interaction command set, refer to S401. Details are not described herein again. In addition, S504a and S504b are an interaction command obtaining manner 1.

S505a: If the NEF has an API, the TRMF requests the interaction command from the NEF based on the first indication information.

It should be understood that when the TRMF requests the interaction command from the NEF, the request may include the type information of the management operation and/or the terminal information.

Specifically, the NEF requests the interaction command from a third-party vendor based on the first indication information through the API.

S505b: The NEF sends a first interaction command to the TRMF, and the TRMF obtains the first interaction command from the NEF.

It should be understood that the first interaction command may be an interaction command corresponding to the type information of the management operation.

It should be understood that S505a and S505b are an interaction command obtaining manner 2. In this embodiment of this application, whether the interaction command is obtained in the obtaining manner 1 or the obtaining manner 2 is not limited.

S506a: The TRMF sends interaction commands to the communication function unit of the terminal device one by one through NAS signaling.

For example, the TRMF sends the first interaction command to the transceiver unit of the terminal device through NAS signaling, and the transceiver unit sends the first interaction command to the interaction proxy unit.

S506b: The communication function unit of the terminal device sends the interaction commands to the terminal OS one by one, and the terminal OS executes the interaction commands one by one to obtain execution results.

For example, the interaction proxy unit sends the first interaction command to the terminal OS, the terminal OS receives the first interaction command from the interaction proxy unit, and the terminal OS executes the first interaction command to obtain a first execution result corresponding to the first interaction command.

S506c: The terminal OS outputs the execution result of the interaction command to the communication function unit, and the communication function unit sends the execution result to the TRMF through NAS signaling.

For example, the terminal OS outputs the first execution result to the interaction proxy unit, the interaction proxy unit outputs the first execution result to the transceiver unit, and the transceiver unit sends the first execution result to the TRMF through NAS signaling.

It should be understood that, if the interaction command set is obtained in the interaction command obtaining manner 1, the TRMF determines a second interaction command based on the first execution result and processing logic in the interaction command set, and continues to implement command interaction with the terminal device in a manner shown in S506a to S506c. The TRMF continuously interacts with the terminal device until the management operation of the interaction command set is completed, that is, until the terminal device reaches the end of the interaction command set.

Optionally, if the interaction command is obtained in the interaction command obtaining manner 2, S506d is performed, and the TRMF sends the first execution result to the third-party vendor through the API of the NEF. Then, the third-party vendor sends the second interaction command to the TRMF based on the first execution result. The TRMF continues to implement command interaction with the terminal device in the manner shown in S506a to S506c. The third-party vendor continuously interacts with the terminal device through the API of the NEF and the TRMF, until the third-party vendor indicates that the management operation is completed, that is, until the terminal device executes a last interaction command corresponding to the management operation.

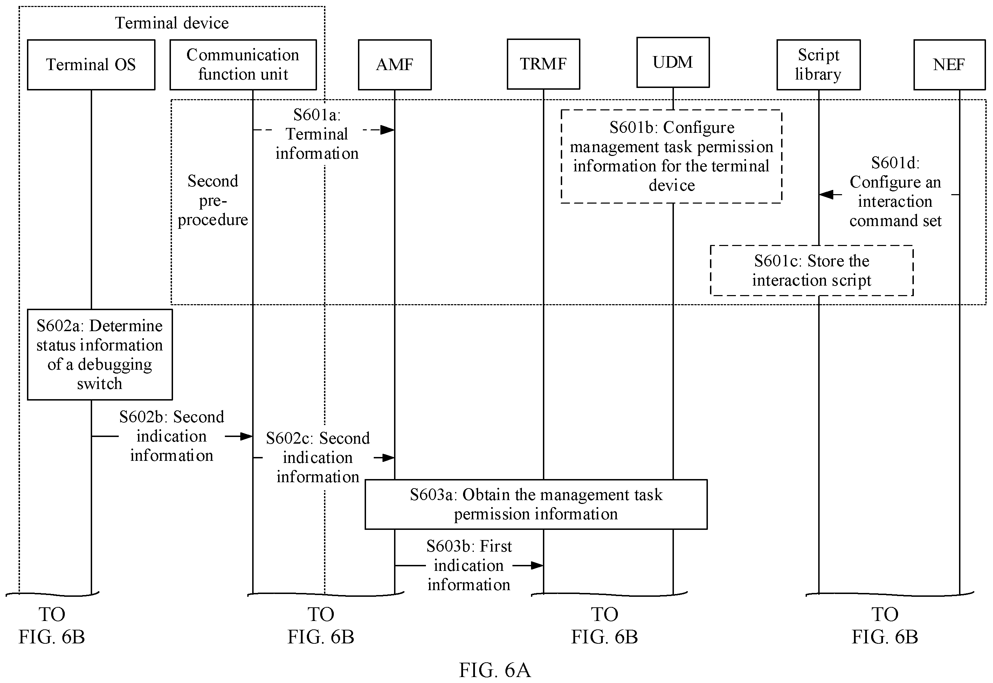

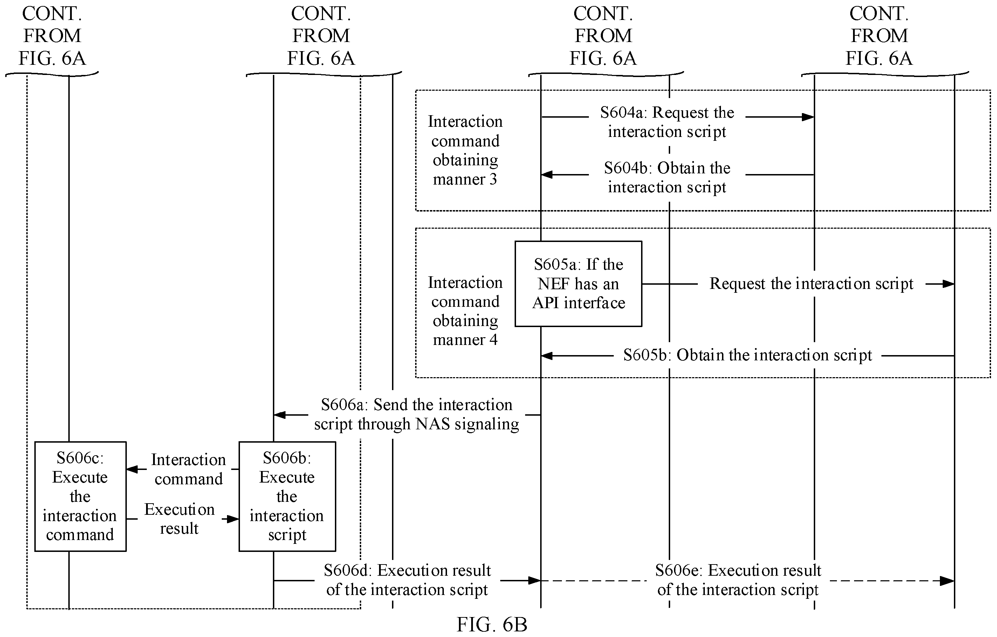

FIG. 6A and FIG. 6B are a schematic flowchart of still another management method according to an embodiment of this application. It may be understood that an execution body of the schematic flowchart in FIG. 6A and FIG. 6B is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, and a script library shown in FIG. 6A and FIG. 6B.

S601a: The terminal device sends terminal information to the AMF.

S601b: The UDM configures management operation permission information for the terminal device, where the management operation permission information indicates that the terminal device is allowed to perform a management operation based on an interaction command.

It should be understood that S601a is similar to S501a, and S601b is similar to S501b. Details are not described herein again.

S601c: The script library stores an interaction script, where the interaction script includes a plurality of interaction commands.

It should be understood that, for a manner of preconfiguring the interaction script in the script library, refer to the manner of preconfiguring the interaction command set in the template library in S501c. Details are not described herein again.

It should be understood that S601a, S601b, S601c, and S601d may all be referred to as a second pre-procedure, and the pre-procedure is also an optional step.

Steps S602a to S602c are similar to steps S502a to S502c. For details, refer to the foregoing descriptions. Details are not described herein again.

Steps S603a and S603b are similar to steps S503a and S503c. For details, refer to the foregoing descriptions. Details are not described herein again.

S604a: The TRMF requests the interaction script from the script library based on first indication information.

S604b: The script library sends the interaction script to the TRMF, and the TRMF obtains the interaction script from the script library.

It should be understood that, for a detailed explanation of the interaction script, refer to S401. Details are not described herein again. Steps S604a and S604b are similar to steps S504a and S504b. Detailed explanations are not described herein again. In addition, S604a and S604b are an interaction command obtaining manner 3.

S605a: If the NEF has an API, the TRMF requests the interaction script from the NEF based on the first indication information.

S605b: The NEF sends the interaction script to the TRMF, and the TRMF obtains the interaction script from the NEF.

It should be understood that S605a and S605b are an interaction command obtaining manner 4. In this embodiment of this application, whether the interaction script is obtained in the obtaining manner 3 or the obtaining manner 4 is not limited. Steps S605a and S605b are similar to steps S505a and S505b. Detailed explanations are not described herein again.

S606a: The TRMF sends the interaction script to the communication function unit of the terminal device through NAS signaling.

For example, the TRMF sends a first interaction script to the transceiver unit of the terminal device through NAS signaling, and the transceiver unit sends the first interaction script to the interaction proxy unit.

S606b: The communication function unit of the terminal device executes the interaction script, and sends the obtained interaction command to the terminal OS.

For example, the interaction proxy unit executes the first interaction script to obtain a first interaction command, and implements interaction with the terminal OS by invoking a command line of the first interaction command in the first interaction script.

S606c: The terminal OS executes the interaction command to obtain an execution result, and sends the execution result to the communication function unit.

For example, the terminal OS executes the first interaction command of the first interaction script, to obtain a first execution result of the first interaction command, and outputs the first execution result of the first interaction command to the interaction proxy unit.

It should be understood that steps S606b and S606c may be that the interaction proxy unit runs the interaction script and invokes the interaction command line in the terminal OS, to implement interaction between the interaction proxy unit and the terminal OS, and further obtain the execution result of the interaction script.

Specifically, the interaction proxy unit in the communication function unit determines a second interaction command based on processing logic in the interaction script, and continues to implement command interaction with the terminal OS in a manner shown in S606b and S606c. The interaction proxy unit continuously interacts with the terminal OS until the management operation of the first interaction script is completed, that is, until the terminal OS reaches the end of the first interaction script. Finally, the execution result of the first interaction script is obtained.

S606d: The communication function unit sends the execution result of the interaction script to the TRMF through NAS signaling.

For example, the interaction proxy unit outputs, to the transceiver unit, the execution result corresponding to the first interaction script, and the transceiver unit sends the execution result of the first interaction script to the TRMF through NAS signaling.

Optionally, if the interaction script is obtained in the interaction command obtaining manner 4, S606e is performed, and the TRMF sends the execution result of the interaction script to a third-party vendor through the API of the NEF.

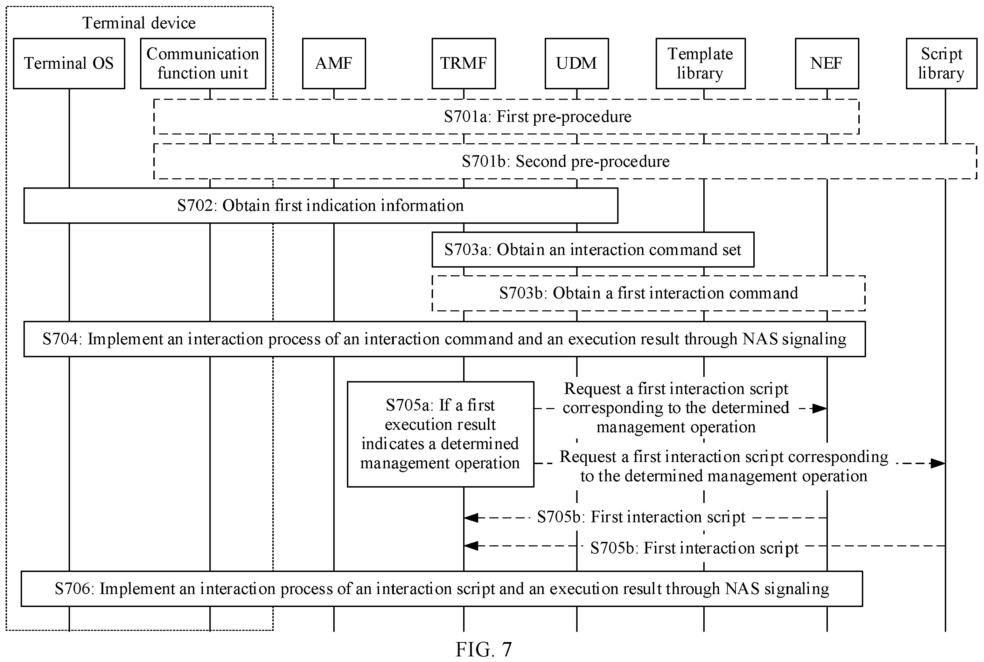

In an implementation, a management operation of some management tasks may be performed on the terminal device through the implementation in FIG. 5A and FIG. 5B, and a management operation of other management tasks may be performed on the terminal device through the implementation in FIG. 6A and FIG. 6B. Details are described below with reference to FIG. 7.

FIG. 7 is a schematic flowchart of yet another management method according to an embodiment of this application. It may be understood that an execution body of the schematic flowchart in FIG. 7 is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, a template library, and a script library shown in FIG. 7.

S701a: Implement a first pre-procedure between the terminal device, the AMF, the UDM, the template library, and the NEF.

It should be understood that, for specific steps included in the first pre-procedure and corresponding explanations, refer to FIG. 5A and FIG. 5B. Details are not described herein again.

S701b: Implement a second pre-procedure between the terminal device, the AMF, the UDM, the script library, and the NEF.

It should be understood that, for specific steps included in the second pre-procedure and corresponding explanations, refer to FIG. 6A and FIG. 6B. Details are not described herein again. Repeated steps in the first pre-procedure and the second pre-procedure do not need to be repeatedly performed, and steps of the terminal in the first pre-procedure and steps of the terminal in the second pre-procedure are optional steps.

S702: Implement steps of obtaining first indication information between the terminal device, the AMF, the TRMF, and the UDM.

It should be understood that, for detailed steps of S702, refer to steps S502a to S502c and steps S503a and S503b. Details are not described herein again.

S703a: Obtain an interaction command set between the TRMF and the template library.

Optionally, S703b: Obtain a first interaction command between the TRMF and the NEF.

It should be understood that, for specific steps included in S703a, refer to the steps included in the obtaining manner 1 shown in FIG. 5A and FIG. 5B, and for specific steps included in S703b, refer to the steps included in the obtaining manner 2 shown in FIG. 5A and FIG. 5B.

S704: Implement an interaction process of an interaction command and an execution result between the terminal device, the TRMF, and the NEF through NAS signaling.

It should be understood that, for specific steps included in S704, refer to the specific steps of S506a to S506d shown in FIG. 5B. Details are not described herein again. It should be further understood that, if the interaction command set is obtained in the interaction command obtaining manner 1, only S704 needs to be implemented between the terminal device and the TRMF.

S705a: If a first execution result corresponding to the first interaction command indicates a determined management operation, the TRMF requests, from the NEF or the script library, a first interaction script corresponding to the determined management operation.

S705b: The NEF or the script library sends the first interaction script to the TRMF.

It should be understood that the first interaction command may be directly obtained from a third-party vendor through an API of the NEF in S704, or the first interaction command may be an interaction command in the interaction command set obtained from the template library in S704. The first interaction command is undetermined. For example, the first interaction command may be an interaction command that is undetermined, such as a judgment command line or a selection command line.

In other words, the first execution result indicates a determining branch or a selection branch in the first interaction command, and an interaction command corresponding to a subsequent management operation of the determining branch or the selection branch is determined.

It should be understood that a manner of obtaining the first interaction script corresponding to the determined management operation is not limited in this embodiment of this application. The first interaction script may be directly obtained from the script library (for specific steps, refer to SS604a and S604b in FIG. 6B). Alternatively, the first interaction script may be obtained from the third-party vendor through the API of the NEF (for specific steps, refer to SS605a and S605b in FIG. 6B).

S706: Implement an interaction process of an interaction script and an execution result between the terminal device, the TRMF, and the NEF through NAS signaling.

It should be understood that, for specific steps included in S706, refer to the specific steps of S606a to S606e shown in FIG. 6B. Details are not described herein again. It should be further understood that, if the interaction script is obtained in the interaction command obtaining manner 3, only S706 needs to be implemented between the terminal device and the TRMF.

In the foregoing technical solution, for the management operation corresponding to the interaction command that is undetermined, the subsequent execution branch may be determined after the terminal OS executes the interaction command. If the execution branch corresponding to the subsequent management operation is determined, the terminal device may be subsequently managed based on the interaction script. In this way, advantages of high real-time performance of interaction command real-time feedback and a small amount of interaction signaling of the interaction script are combined, so that a delay in managing the terminal device can be reduced.

With reference to FIG. 8 to FIG. 10, the following describes in detail that a network element having a terminal remote management function sends a remote interaction command to a terminal device through user plane signaling, so that the terminal device performs a management operation corresponding to the interaction command. To clearly describe the terminal remote management function, similarly, in FIG. 8 to FIG. 10, an example in which the first management network element is an independent TRMF network element is used for description.

FIG. 8 is a schematic flowchart of yet another management method according to an embodiment of this application. It may be understood that an execution body of the schematic flowchart in FIG. 8 is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, an SMF, and UPF, and a template library shown in FIG. 8.

S801: Implement a first pre-procedure between the terminal device, the AMF, the UDM, the template library, and the NEF.

It should be understood that, for specific steps included in the first pre-procedure and corresponding explanations, refer to FIG. 5A and FIG. 5B. Details are not described herein again.

S802: Implement steps of obtaining first indication information between the terminal device, the AMF, the TRMF, and the UDM.

It should be understood that, for detailed steps of S802, refer to steps S502a to S502c and steps S503a and S503b. Details are not described herein again.

S803a: Obtain an interaction command set between the TRMF and the template library.

Optionally, S803b: Obtain a first interaction command between the TRMF and the NEF.

It should be understood that, for specific steps included in S803a, refer to the steps included in the obtaining manner 1 shown in FIG. 5A and FIG. 5B, and for specific steps included in S803b, refer to the steps included in the obtaining manner 2 shown in FIG. 5A and FIG. 5B.

S804a: The TRMF sends fourth indication information to the communication function unit of the terminal device through NAS signaling, where the fourth indication information indicates the terminal device to establish a user plane connection to the TRMF.

Specifically, the TRMF may send the fourth indication information to the AMF, the AMF encapsulates the fourth indication information into the NAS signaling, and the AMF sends the fourth indication information to the communication function unit of the terminal device through the NAS signaling.

Alternatively, the TRMF may directly encapsulate the fourth indication information into the NAS signaling, the TRMF sends the NAS signaling to the AMF, and the AMF forwards the NAS signaling to the communication function unit of the terminal device.

The fourth indication information may include a data network name DNN used to identify a connected target TRMF and/or an identifier of the target TRMF.

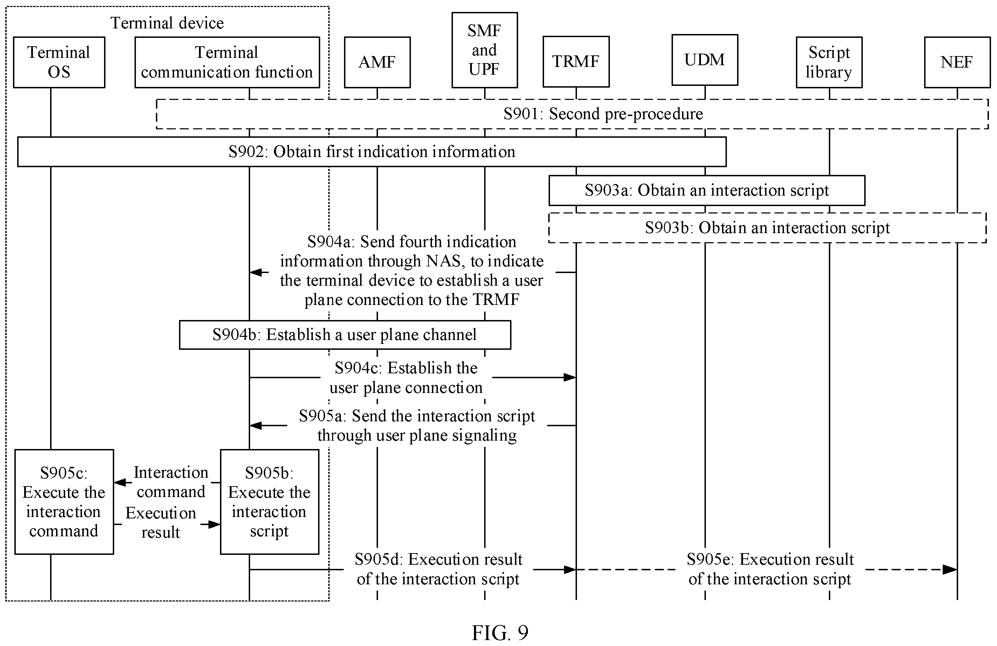

It should be understood that a network device side may include a plurality of TRMF network elements, and a current TRMF that performs the steps of sending the fourth indication information to the AMF in S801 to S803a/S803b and S804a may be a same entity or different entities as the target TRMF. A current TRMF and a target TRMF shown in FIG. 9 are a same entity.

S804b: The communication function unit of the terminal device establishes a user plane channel through the SMF and the UPF based on the DNN of the target TRMF.

In other words, the transceiver unit of the communication function unit of the terminal device establishes a protocol data unit session (protocol data unit session, PDU session) through the SMF and the UPF based on the DNN of the target TRMF.

S804c: The communication function unit of the terminal device establishes a user plane connection to the target TRMF based on the identifier of the target TRMF.

Specifically, the transceiver unit in the communication function unit of the terminal device obtains an entity IP address of the target TRMF in a manner such as address query (for example, domain name system (domain name system, DNS) query) based on the identifier of the target TRMF, and establishes user plane application layer communication with the target TRMF.

Optionally, when establishing the user plane connection, the terminal device sends type information of the management operation and/or terminal information to the target TRMF.

It should be understood that when the current TRMF and the target TRMF are different entities, the target TRMF may re-obtain an interaction command set in a network. For example, if the target TRMF that establishes a connection to the terminal does not find a locally stored interaction command set of the terminal device, a TRMF entity that stores the interaction command set of the terminal device is obtained from the network by querying the terminal information, and the interaction command set of the terminal device is obtained. For another example, if the target TRMF that establishes a connection to the terminal does not find a locally stored interaction command set of the terminal device, the target TRMF re-obtains the interaction command set or the interaction command from the template library or the NEF based on the type information of the management operation and/or the terminal information. A manner in which the target TRMF re-obtains the interaction command is not limited in this embodiment of this application.

S805a: The target TRMF sends interaction commands one by one to the communication function unit of the terminal device through user plane signaling.

S805b: The communication function unit of the terminal device sends the interaction commands to the terminal OS one by one, and the terminal OS executes the interaction commands one by one to obtain execution results.

S805c: The terminal OS outputs the execution result of the interaction command to the communication function unit, and the communication function unit sends the execution result to the TRMF through user plane signaling.

It should be understood that steps S805a to S805c are similar to steps S506a to S506c, and a difference lies in that the terminal device and the TRMF interact with each other through NAS signaling in steps S506a to S506c in FIG. 5B, while the terminal device and the TRMF interact with each other through user plane signaling in steps S805a to S805c in FIG. 8. Therefore, detailed descriptions of steps S805a to S805c are not described herein again.

Optionally, if the interaction command is obtained through S803b, S805d is performed, and the TRMF sends the first execution result to the third-party vendor through the API of the NEF. Then, the third-party vendor sends the second interaction command to the TRMF based on the first execution result. The TRMF continues to implement command interaction with the terminal device in the manner shown in S805a to S805c. The third-party vendor continuously interacts with the terminal device through the API of the NEF and the TRMF, until the third-party vendor indicates that the management operation is completed, that is, until the terminal device executes a last interaction command corresponding to the management operation.

FIG. 9 is a schematic flowchart of yet another management method according to an embodiment of this application. It may be understood that an execution body of the schematic flowchart in FIG. 9 is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, an SMF, a UPF, and a script library shown in FIG. 9.

S901: Implement a second pre-procedure between the terminal device, the AMF, the UDM, the script library, and the NEF.

It should be understood that, for specific steps included in the second pre-procedure and corresponding explanations, refer to FIG. 6A and FIG. 6B. Details are not described herein again.

S902: Implement steps of obtaining first indication information between the terminal device, the AMF, the TRMF, and the UDM.

It should be understood that, for detailed steps of S902, refer to steps S502a to S502c and steps S503a and S503b. Details are not described herein again.

S903a: Obtain an interaction script between the TRMF and the script library.

Optionally, S903b: Obtain an interaction script between the TRMF and the NEF.

It should be understood that, for specific steps included in S903a, refer to the steps included in the obtaining manner 3 shown in FIG. 6A and FIG. 6B, and for specific steps included in S903b, refer to the steps included in the obtaining manner 4 shown in FIG. 6A and FIG. 6B.

Steps S904a to S904c are similar to steps S804a to S804c. Details are not described herein again.

S905a: The TRMF sends the interaction script to the communication function unit of the terminal device through user plane signaling.

S905b: The communication function unit of the terminal device executes the interaction script, and sends the obtained interaction command to the terminal OS.

S905c: The terminal OS executes the interaction command to obtain an execution result, and sends the execution result to the communication function unit.

S905d: The communication function unit sends the execution result of the interaction script to the TRMF through user plane signaling.

Optionally, if the interaction script is obtained through S903b, S905e is performed, and the TRMF sends the execution result of the interaction script to the third-party vendor through the API of the NEF.

It should be understood that steps S905a to S905e are similar to steps S606a to S606e, and a difference lies in that the terminal device and the TRMF interact with each other through NAS signaling in steps S606a to S606e in FIG. 6B, while the terminal device and the TRMF interact with each other through user plane signaling in steps S905a to S905e in FIG. 9. Therefore, detailed descriptions of steps S905a to S905e are not described herein again.

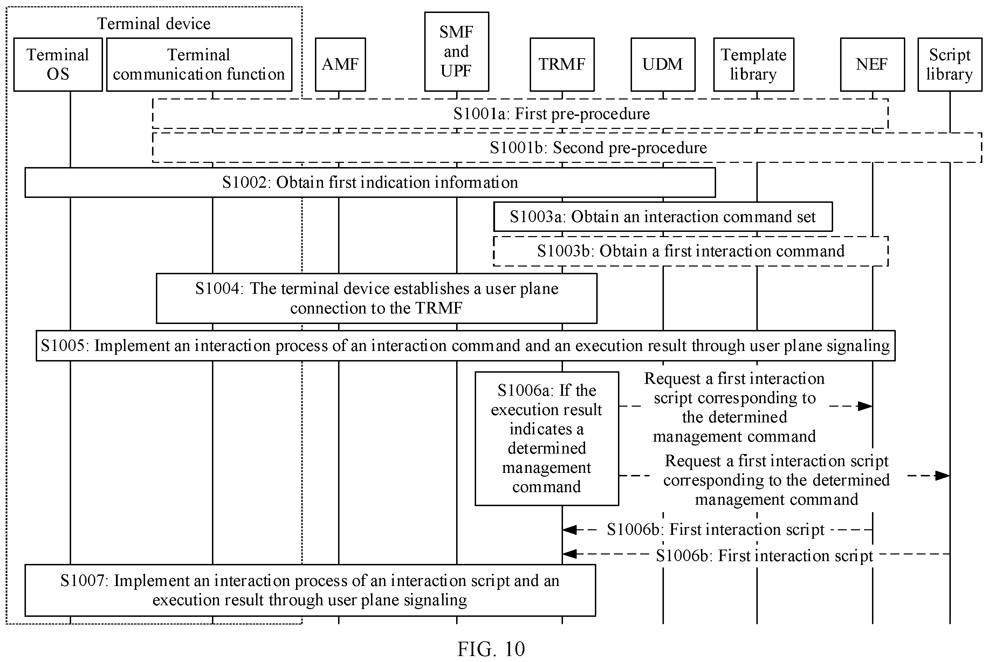

Similarly, similar to the information transmission performed through NAS signaling in FIG. 5A and FIG. 5B to FIG. 7, in an implementation, a management operation of some management tasks may be performed on the terminal device through the implementation in FIG. 8, and a management operation of other management tasks may be performed on the terminal device through the implementation in FIG. 9. Details are described below with reference to FIG. 10.

FIG. 10 is a schematic flowchart of yet another management method according to an embodiment of this application. It may be understood that an execution body of the schematic flowchart in FIG. 10 is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, an SMF, a UPF, a template library, and a script library shown in FIG. 10.

S1001a: Implement a first pre-procedure between the terminal device, the AMF, the UDM, the template library, and the NEF.

S1001b: Implement a second pre-procedure between the terminal device, the AMF, the UDM, the script library, and the NEF.

It should be understood that, for specific steps included in the first pre-procedure and corresponding explanations, refer to FIG. 5A and FIG. 5B. For specific steps included in the second pre-procedure and corresponding explanations, refer to FIG. 6A and FIG. 6B. Details are not described herein again. It should be understood that repeated steps in the first pre-procedure and the second pre-procedure do not need to be repeatedly performed.

S1002: Implement steps of obtaining first indication information between the terminal device, the AMF, the TRMF, and the UDM.

It should be understood that, for detailed steps of S1002, refer to steps S502a to S502c and steps S503a and S503b. Details are not described herein again.

S1003a: Obtain an interaction command set between the TRMF and the template library.

Optionally, S1003b: Obtain a first interaction command between the TRMF and the NEF.

It should be understood that, for specific steps included in S1003a, refer to the steps included in the obtaining manner 1 shown in FIG. 5A and FIG. 5B, and for specific steps included in S1003b, refer to the steps included in the obtaining manner 2 shown in FIG. 5A and FIG. 5B.

S1004: Establish a user plane between the terminal device and the TRMF among the terminal device, the SMF, the UPF, and the TRMF.

It should be understood that, for specific steps included in S1004, refer to steps S804a to S804c in FIG. 8.

S1005: Implement an interaction process of an interaction command and an execution result between the terminal device, the TRMF, and the NEF through user plane signaling.

It should be understood that, for specific steps included in S1005, refer to the specific steps of S805a to S804e shown in FIG. 8. Details are not described herein again. It should be further understood that, if the interaction command set is obtained in S1003a, S1005 needs to be implemented only between the terminal device and the TRMF.

S1006a: If a first execution result corresponding to the first interaction command indicates a determined management operation, the TRMF requests, from the NEF or the script library, a first interaction script corresponding to the determined management operation.

S1006b: The NEF or the script library sends the first interaction script to the TRMF.

It should be understood that, for detailed processes of S1006a and S1006b, refer to S705a and S705b. Details are not described herein again.

S1007: Implement an interaction process of an interaction script and an execution result between the terminal device, the TRMF, and the NEF through user plane signaling.

It should be understood that, for specific steps included in S1007, refer to the specific steps of S606a to S606e shown in FIG. 6B. Details are not described herein again. It should be further understood that, if the interaction script is obtained in the interaction command obtaining manner 3, only S1007 needs to be implemented between the terminal device and the TRMF.

In the execution processes of the interaction commands in FIG. 5A and FIG. 5B to FIG. 10, in a specific management operation, the terminal device needs to obtain resource information from a network device side before completing a specific management task. For example, when software is installed on the terminal device side, before the software is installed, a software image needs to be obtained in advance.

FIG. 11A and FIG. 11B are a schematic flowchart of yet another management method according to an embodiment of this application. It may be understood that an execution body of the schematic flowchart in FIG. 11A and FIG. 11B is similar to that in FIG. 5A and FIG. 5B. For detailed descriptions, refer to related parts in FIG. 5A and FIG. 5B. Details are not described herein again. For the logical modules of the terminal device, refer to FIG. 3A and FIG. 3B. The network device may include function network elements, for example, an AMF, a TRMF, a UDM, a NEF, an SMF, a UPF, a template library, a resource repository, and a script library shown in FIG. 10.

It should be understood that, for resource information that may be included in the resource repository, refer to the foregoing descriptions of the resource repository. Details are not described herein again.

For S1101a and S1101b, refer to the first configuration procedure in FIG. 5A and FIG. 5B and the second configuration procedure in FIG. 6A and FIG. 6B. Details are not described herein again.

S1101c: The NEF configures the resource information for the resource repository. S1101d: The resource repository stores the resource information.

The NEF may include an API, and a third-party vendor sends the resource information to the NEF through the API of the NEF.

It should be understood that S1101c and S1101d may also be optional steps, and the resource information may alternatively be configured in the resource repository in another manner. This is not limited in this embodiment of this application.

For specific steps of S1102, S1103a, and S1103b, refer to related steps in FIG. 5A and FIG. 5B to FIG. 10. Details are not described herein again.

For related steps of S1104a, refer to related steps in FIG. 5A and FIG. 5B and FIG. 6A and FIG. 6B. For related steps of S1104b, refer to related steps in FIG. 8 and FIG. 9. Details are not described herein again.

S1105a: The TRMF determines, based on an execution result, that the terminal device needs to obtain the resource information from the resource repository.

For example, if the execution result indicates that software needs to be installed on the terminal device, it is determined that the terminal device needs to obtain, from the resource repository, a software image corresponding to the software.

Specifically, the TRMF obtains identification information of a target resource repository based on the execution result.

S1105b: The TRMF sends third indication information to a communication function unit of the terminal device, where the third indication information indicates the terminal device to establish a user plane connection to the resource repository.

The third indication information includes the identification information of the target resource repository. For example, the identification information may include a data network name (data network name, DNN) of the resource repository and/or an identifier of the resource repository.

Specifically, the TRMF may send the third indication information to the AMF, the AMF encapsulates the third indication information into the NAS signaling, and the AMF sends the third indication information to the communication function unit of the terminal device through the NAS signaling.

Alternatively, the TRMF may directly encapsulate the third indication information into the NAS signaling, the TRMF sends the NAS signaling to the AMF, and the AMF forwards the NAS signaling to the communication function unit of the terminal device.

It should be understood that there may be a plurality of resource repositories, and different resource repositories may include different resource information.

Optionally, before S1105b, the TRMF determines the identification information of the target resource repository, where the identification information of the target resource repository may be determined based on information indicated by the execution result.

S1105c: The communication function unit of the terminal device establishes a user plane channel between the communication function unit and the resource repository based on the DNN of the target resource repository through the SMF and the UPF.

In other words, a transceiver unit of the communication function unit of the terminal device establishes a PDU session with the resource repository based on the DNN of the target resource repository through the SMF and the UPF.

S1106a: A terminal OS of the terminal device establishes a connection to the target repository based on the identifier of the target resource repository, and requests resource information from the target repository.

S1106b: The target resource repository sends the resource information to the terminal OS of the terminal device.

S1106c: The terminal OS continues to interact with a function unit in a terminal software domain, and performs a corresponding management task based on the resource information.

It should be understood that the management task may include: system initialization, software installation, update, deletion, configuration, control, and obtaining a resource on a terminal.

The management methods provided in embodiments of this application are described above in detail with reference to FIG. 4A and FIG. 4B to FIG. 11A and FIG. 11B. It may be understood that, to implement the foregoing functions, a corresponding hardware structure and/or a corresponding software module for performing the functions are/is included.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

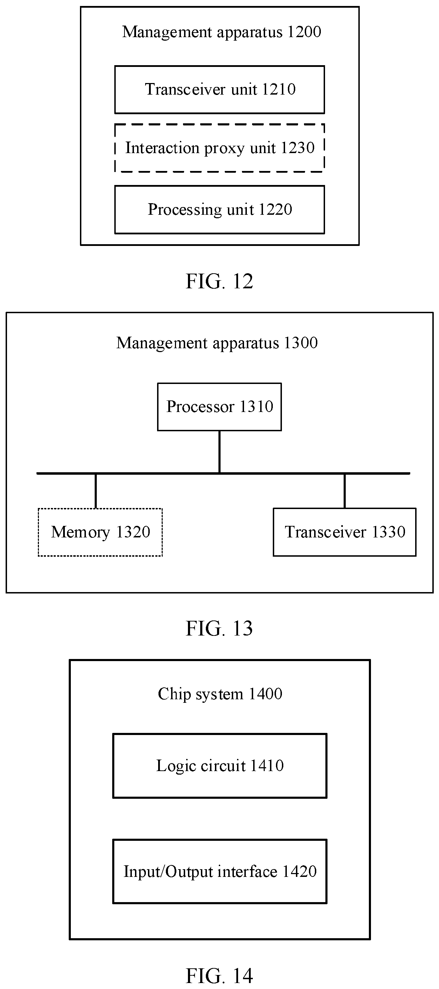

The following describes in detail management apparatuses provided in embodiments of this application with reference to FIG. 12 to FIG. 14. It should be understood that descriptions of apparatus embodiments correspond to the descriptions of the method embodiments. Therefore, for content that is not described in detail, refer to the foregoing method embodiments. For brevity, some content is not described again.

FIG. 12 is a diagram of a management apparatus according to an embodiment of this application. The apparatus 1200 may include a processing unit 1220, and the processing unit 1220 may be configured to process data. The apparatus 1200 may further include a transceiver unit 1210. The transceiver unit 1210 may implement a corresponding communication function. The transceiver unit 1210 may also be referred to as a communication interface, a communication unit, or an interface unit. It should be understood that unless otherwise specified, if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 1200 may further include a storage unit, the storage unit may be configured to store instructions and/or data, and the processing unit 1220 may read the instructions and/or the data in the storage unit, so that the apparatus implements the foregoing method embodiments.

The apparatus 1200 may be configured to perform an action performed by the first management network element in the foregoing method embodiments. In this case, the apparatus 1200 may be a communication device or a component that can be configured in a communication device. The transceiver unit 1210 is configured to perform sending and/or receiving-related operations on the communication device side in the foregoing method embodiments. The processing unit 1220 is configured to perform a processing related operation of the first management network element in the foregoing method embodiments.

In a design, the apparatus 1200 is configured to perform actions performed by the first management network element in the method embodiments shown in FIG. 4A and FIG. 4B to FIG. 11A and FIG. 11B. The execution body may be a chip, a chip system, or a processor that supports the first management network element in implementing a corresponding method, or may be a logical module or software that can implement all or a part of functions of the first management network element.

Specifically, the transceiver unit 1210 is configured to obtain an interaction command, where the interaction command is used to perform a management operation on a terminal device; and send the interaction command to the terminal device.

For parts that are not described in detail, refer to the foregoing method embodiments.

In a design, the management apparatus 1200 is configured to perform actions performed by the terminal device in the method embodiments shown in FIG. 4A and FIG. 4B to FIG. 11A and FIG. 11B. The execution body may be a chip, a chip system, or a processor that supports the terminal device in implementing a corresponding method, or may be a logical module or software that can implement all or a part of functions of the terminal device.

It should be understood that, if the management apparatus 1200 is configured to perform actions performed by the terminal device, the management apparatus 1200 may further include an interaction proxy unit 1230, and the communication function unit includes a transceiver unit and an interaction proxy unit.

Specifically, the communication function unit is configured to receive an interaction command from a first management network element. The processing unit 1220 is configured to execute the interaction command to obtain an execution result corresponding to the management operation.

For parts that are not described in detail, refer to the foregoing method embodiments.

It should be understood that a specific process in which the units perform the foregoing corresponding steps is described in detail in the foregoing method embodiments, and for brevity, details are not described herein.

The processing unit 1220 in the foregoing embodiments may be implemented by at least one processor or a processor-related circuit. The transceiver unit 1210 may be implemented by a transceiver or a transceiver-related circuit. The storage unit may be implemented by at least one memory.

FIG. 13 is a diagram of a structure of a management apparatus according to an embodiment of this application.

As shown in FIG. 13, an embodiment of this application further provides a management apparatus 1300. The apparatus 1300 includes a processor 1313. Optionally, the apparatus further includes a memory 1320. The processor 1313 is coupled to the memory 1320. The memory 1320 is configured to store computer program code or instructions and/or data. The processor 1313 is configured to execute the computer program code or instructions and/or data stored in the memory 1320, so that the method in the foregoing method embodiment is performed.

Optionally, the apparatus 1300 includes one or more processors 1313.

Optionally, as shown in FIG. 13, the apparatus 1300 may further include the memory 1320.

Optionally, the apparatus 1300 may include one or more memories 1320.

Optionally, the memory 1320 and the processor 1313 may be integrated, or separately disposed.

Optionally, as shown in FIG. 13, the apparatus 1300 may further include a transceiver 1330. The transceiver 1330 is configured to receive and/or send signals. For example, the processor 1313 is configured to control the transceiver 1330 to receive and/or send the signals.

In a solution, the apparatus 1300 is configured to implement operations performed by the first management network element, the second management network element, or the terminal device in the foregoing method embodiments.

For example, the processor 1313 is configured to implement a processing-related operation performed by the first management network element, the second management network element, or the terminal device in the foregoing method embodiments, and the transceiver 1330 is configured to implement sending and/or receiving-related operations performed by the first management network element, the second management network element, or the terminal device in the foregoing method embodiments.

FIG. 14 is a diagram of a chip system 1400 according to an embodiment of this application. As shown in FIG. 14, the chip system 1400 (or may be referred to as a processing system) includes a logic circuit 1410 and an input/output interface (input/output interface) 1420. The logic circuit is configured to be coupled to the input interface, and transmit a data parameter through the input/output interface, to perform the methods in the foregoing method embodiments. A device in which the chip system 1400 is installed may implement the methods and functions in embodiments of this application. For example, the logic circuit 1410 may be a processing circuit in the chip system 1400, to control the device in which the chip system 1400 is installed, or may be coupled to a storage unit, and invoke instructions in the storage unit, so that the device can implement the methods and functions in embodiments of this application. The input/output interface 1420 may be an input/output circuit in the chip system 1400, to output information processed by the chip system 1400, or input to-be-processed data or signaling information to the chip system 1400 for processing.

In a solution, the chip system 1400 is configured to implement operations performed by the management apparatus (for example, the first management network element, the second management network element, or the terminal device) in the foregoing method embodiments.

For example, the logic circuit 1410 is configured to implement a processing-related operation performed by the first management network element, the second management network element, or the terminal device in the foregoing method embodiments, and the input/output interface 1420 is configured to implement sending and/or receiving-related operations performed by the first management network element, the second management network element, or the terminal device in the foregoing method embodiments.

An embodiment of this application further provides a communication system. The communication system includes the first management network element, the second management network element, or the terminal device that implements the management method in the foregoing method embodiments.

An embodiment of this application further provides a computer-readable storage medium. The computer-readable storage medium stores computer instructions or program code used to implement the method performed by the management apparatus (for example, the first management network element, the second management network element, or the terminal device) in the foregoing method embodiments.

For example, when the computer program is executed by a computer, the computer is enabled to implement the method performed by the management apparatus (for example, the first management network element, the second management network element, or the terminal device) in the foregoing method embodiments.

An embodiment of this application further provides a computer program product including instructions. When the instructions are executed by a computer, the computer is enabled to implement the method performed by the management apparatus (the first management network element, the second management network element, or the terminal device) in the foregoing method embodiments.

An embodiment of this application further provides a management system. The management system includes at least one of a first management network element, a second management network element, and a terminal device.

For explanations and beneficial effects of related content in any one of the apparatuses provided above, refer to the corresponding method embodiments provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with units and algorithm steps of the examples described in embodiments disclosed in this specification, this application may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A management method, wherein the method is applied to a first management network element and comprises:
obtaining an interaction command, wherein the interaction command is used to perform a management operation on a terminal device; and
sending the interaction command to the terminal device.

2. The method according to claim 1, wherein the interaction command comprises an operating system command and/or a management tool command.

3. The method according to claim 2, wherein the operating system command comprises a command for managing an operating system of the terminal device, and the management tool command is a command for invoking management tool software to perform a management function.

4. The method according to any one of claims 1 to 3, wherein sending the interaction command to the terminal device comprises:
sending the interaction command to the terminal device through non-access stratum signaling or user plane signaling.

5. The method according to any one of claims 1 to 4, wherein the method further comprises:
obtaining first indication information, wherein the first indication information indicates that the terminal device is configured with permission information for executing the interaction command; and
obtaining the interaction command comprises:
obtaining the interaction command based on the first indication information.

6. The method according to claim 5, wherein the first indication information is obtained based on second indication information, and the second indication information indicates that the terminal device has enabled execution permission on the interaction command.

7. The method according to any one of claims 1 to 4, wherein the method further comprises:
obtaining second indication information, wherein the second indication information indicates that the terminal device has enabled execution permission on the interaction command; and
obtaining the interaction command comprises:
obtaining the interaction command based on the second indication information.

8. The method according to claim 5 or 6, wherein obtaining the first indication information comprises: receiving the first indication information from a second management network element, wherein
the second management network element comprises one of an access and mobility management function network element, a session management function network element, or a policy control function network element, and the first management network element comprises a terminal remote management function.

9. The method according to any one of claims 1 to 8, wherein the method further comprises:
obtaining an interaction command set from a template library, wherein the interaction command set comprises the interaction command.

10. The method according to any one of claims 1 to 8, wherein obtaining the interaction command comprises:
obtaining the interaction command from a network exposure function network element.

11. The method according to any one of claims 1 to 10, wherein obtaining the interaction command comprises:
obtaining an interaction script from a script library, wherein the interaction script comprises the interaction command; and
sending the interaction command to the terminal device comprises:
sending the interaction script to the terminal device.

12. The method according to any one of claims 1 to 11, wherein the method further comprises:
receiving an execution result of the interaction command from the terminal device;
obtaining identification information of a resource repository from the resource repository based on the execution result, wherein the resource repository comprises at least one of a software image, a management tool, a component software package, an auxiliary tool, and a license file; and
sending third indication information to the terminal device, wherein the third indication information comprises the identification information.

13. A management method, wherein the method is applied to a terminal device and comprises:
receiving an interaction command from a first management network element; and
executing the interaction command to obtain an execution result corresponding to a management operation.

14. The method according to claim 13, wherein the interaction command comprises an operating system command and/or a management tool command.

15. The method according to claim 14, wherein the operating system command comprises a command for managing an operating system of the terminal device, and the management tool command is a command for invoking management tool software to perform a management function.

16. The method according to any one of claims 13 to 15, wherein receiving the interaction command from the first management network element comprises:
receiving the interaction command from the first management network element through non-access stratum signaling or user plane signaling.

17. The method according to any one of claims 13 to 16, wherein the method further comprises:
sending second indication information to a second management network element, wherein the second indication information indicates that the terminal device has enabled execution permission on the interaction command.

18. The method according to claim 17, wherein sending the second indication information to the second management network element comprises:
when status information of a debugging switch is opened, sending the second indication information to the second management network element.

19. The method according to any one of claims 13 to 18, wherein receiving the interaction command from the first management network element comprises:
receiving an interaction script from the first management network element, wherein the interaction script comprises the interaction command; and
executing the interaction command to obtain the execution result comprises:
executing the interaction script to obtain an execution result corresponding to the interaction script.

20. The method according to any one of claims 13 to 19, wherein the method further comprises:
sending the execution result to the first management network element; and
receiving third indication information from the first management network element, wherein the third indication information comprises identification information that is of a resource repository and that is determined based on the execution result, and the resource repository comprises at least one of a software image, a management tool, a component software package, an auxiliary tool, and a license file.

21. The method according to claim 20, wherein the method further comprises:
obtaining information in the resource repository based on the identification information; and
performing a corresponding management task based on the information in the resource repository.

22. A management apparatus, wherein the apparatus is located in a first management network element, the apparatus comprises a transceiver unit, and the transceiver unit is configured to:
obtain an interaction command, wherein the interaction command is used to perform a management operation on a terminal device; and
send the interaction command to the terminal device.

23. The apparatus according to claim 22, wherein the interaction command comprises an operating system command and/or a management tool command.

24. The apparatus according to claim 23, wherein the operating system command comprises a command for managing an operating system of the terminal device, and the management tool command is a command for invoking management tool software to perform a management function.

25. The apparatus according to any one of claims 22 to 24, wherein the transceiver unit is specifically configured to:
send the interaction command to the terminal device through non-access stratum signaling or user plane signaling.

26. The apparatus according to any one of claims 22 to 25, wherein the transceiver unit is further configured to:
obtain first indication information, wherein the first indication information indicates that the terminal device is configured with permission information for executing the interaction command; and
the transceiver unit is specifically configured to:
obtain the interaction command based on the first indication information.

27. The apparatus according to claim 26, wherein the first indication information is obtained based on second indication information, and the second indication information indicates that the terminal device has enabled execution permission on the interaction command.

28. The apparatus according to any one of claims 22 to 25, wherein the transceiver unit is further configured to:
obtain second indication information, wherein the second indication information indicates that the terminal device has enabled execution permission on the interaction command; and
the transceiver unit is specifically configured to:
obtain the interaction command based on the second indication information.

29. The method according to claim 26 or 27, wherein the transceiver unit is specifically configured to receive the first indication information from a second management network element, wherein
the second management network element comprises one of an access and mobility management function network element, a session management function network element, or a policy control function network element, and the first management network element comprises a terminal remote management function.

30. The apparatus according to any one of claims 22 to 29, wherein the transceiver unit is further configured to:
obtain an interaction command set from a template library, wherein the interaction command set comprises the interaction command.

31. The apparatus according to any one of claims 22 to 29, wherein the transceiver unit is specifically configured to:
obtain the interaction command from a network exposure function network element.

32. The apparatus according to any one of claims 22 to 31, wherein the transceiver unit is specifically configured to:
obtain an interaction script from a script library, wherein the interaction script comprises the interaction command; and
send the interaction script to the terminal device.

33. The apparatus according to any one of claims 22 to 32, wherein the transceiver unit is further configured to:
obtain identification information of a resource repository from the resource repository based on an execution result, wherein the resource repository comprises at least one of a software image, a management tool, a component software package, an auxiliary tool, and a license file; and
send third indication information to the terminal device, wherein the third indication information comprises the identification information.

34. A management apparatus, wherein the apparatus is located in a terminal device, and the apparatus comprises a communication function unit and a processing unit, wherein
the communication function unit is configured to receive an interaction command from a first management network element, wherein the interaction command is used to perform a management operation on the terminal device;
the processing unit is configured to execute the interaction command to obtain an execution result corresponding to the management operation; and
the communication function unit is further configured to send the execution result to the first management network element.

35. The apparatus according to claim 34, wherein the interaction command comprises an operating system command and/or a management tool command.

36. The apparatus according to claim 35, wherein the operating system command comprises a command for managing an operating system of the terminal device, and the management tool command is a command for invoking management tool software to perform a management function.

37. The apparatus according to any one of claims 34 to 36, wherein the communication function unit specifically comprises a transceiver unit and an interaction proxy unit, wherein
the transceiver unit is specifically configured to receive the interaction command from the first management network element through non-access stratum signaling or user plane signaling; and
the interaction proxy unit is specifically configured to: obtain the interaction command from the transceiver unit, and send the interaction command to the operating system of the terminal device.

38. The apparatus according to claim 37, wherein
the interaction proxy unit is further configured to send second indication information to the transceiver unit, wherein the second indication information indicates that the terminal device has enabled execution permission on the interaction command; and
the transceiver unit is further configured to send the second indication information to a second management network element.

39. The apparatus according to claim 38, wherein the interaction proxy unit is specifically configured to:
when status information of a debugging switch is opened, receive the second indication information from the operating system of the terminal device.

40. The apparatus according to any one of claims 34 to 39, wherein the communication function unit specifically comprises the transceiver unit and the interaction proxy unit, wherein
the transceiver unit is specifically configured to receive the interaction command from the first management network element one by one;
the interaction proxy unit is specifically configured to: obtain the interaction command from the transceiver unit, and send the interaction command to the operating system of the terminal device; and
the processing unit is specifically configured to:
execute the interaction command in the operating system of the terminal device, to obtain the execution result.

41. The apparatus according to any one of claims 34 to 39, wherein the communication function unit specifically comprises the transceiver unit and the interaction proxy unit, wherein
the transceiver unit is specifically configured to receive an interaction script from the first management network element, wherein the interaction script comprises the interaction command;
the interaction proxy unit is specifically configured to: obtain the interaction script from the transceiver unit, execute the interaction script, and send the interaction command to the operating system of the terminal device; and
the processing unit is specifically configured to:
execute the interaction command in the operating system of the terminal device, to obtain an execution result of the interaction script.

42. The apparatus according to any one of claims 34 to 41, wherein the communication function unit specifically comprises the transceiver unit and the interaction proxy unit, wherein
the transceiver unit is specifically configured to receive third indication information from the first management network element, wherein the third indication information indicates identification information that is of a resource repository and that is determined based on the execution result, and the resource repository comprises at least one of a software image, a management tool, a component software package, an auxiliary tool, and a license file; and
the interaction proxy unit is specifically configured to: obtain the third indication information from the transceiver unit, and send the third indication information to the operating system of the terminal device.

43. The apparatus according to claim 42, wherein
the transceiver unit is further specifically configured to obtain information in the resource repository based on the identification information;
the interaction proxy unit is specifically configured to: obtain the information in the resource repository from the transceiver unit, and send the information to the operating system of the terminal device; and
the processing unit is further configured to perform a corresponding management task based on the information in the resource repository.

44. A management apparatus, comprising a processor, wherein the processor is coupled to a memory, the memory is configured to store computer program code or instructions, and the processor is configured to execute the computer program code or the instructions in the memory, so that the apparatus performs the method according to any one of claims 1 to 12, or the apparatus performs the method according to any one of claims 13 to 21.

45. A computer-readable storage medium, wherein the computer-readable storage medium stores computer program code or instructions, and when the computer program code or the instructions are run on a computer, the computer is enabled to perform the method according to any one of claims 1 to 12, or the computer is enabled to perform the method according to any one of claims 13 to 21.

46. A chip, wherein the chip is coupled to a memory and is configured to read and execute program instructions stored in the memory, to implement the method according to any one of claims 1 to 12 or implement the method according to any one of claims 13 to 21.

47. A management system, comprising at least one of a first management network element and a terminal device, wherein the first management network element is configured to perform the method according to any one of claims 1 to 12, and the terminal device is configured to perform the method according to any one of claims 13 to 21.
